# EUROPEAN PATENT SPECIFICATION

(11) **EP 0 646 521 B1**
(45) Date of publication and mention of the grant of the patent: **26.03.1997**
(21) Application number: 94119188.4
(22) Date of filing: 19.12.1991
(51) Int. Cl.: B63B 3/20, B63B 3/22, B63B 3/12, B63B 9/06

(54) **Vessel hull structure and method**
Schiffsrumpfstruktur und Verfahren zu dessen Herstellung
Structure et méthode de construction pour coque de bateau

(30) Priority: 01.04.1991 US 678802
(43) Date of publication of application: 05.04.1995
(62) Divisional of application: 91311834.5
(73) Proprietor: METRO MACHINE CORPORATION, Norfolk, Virginia 23501 (US); MARINEX INTERNATIONAL INC., Hoboken, New Jersey 07030 (US)
(72) Inventor: Goldbach, Richard A., Norfolk, Virginia 23517 (US); Salzer, Richard, Sugar Land, Texas 77448 (US); McConnell, Frank E., Norfolk, Virginia 23517 (US)
(74) Representative: Laight, Martin Harvey

(56) References cited:
- EP-A- 0 460 851
- WO-A-87/02086
- FR-A- 2 443 897
- FR-A- 2 483 877
- GB-A- 126 760
- GB-A- 2 143 184
- GB-A- 2 143 783
- US-A- 2 353 260
- US-A- 4 638 754

## Description

The present specification contains some subject matter in common with the specification of EP91311834.5 (EP-A-0,507,034).

The present invention relates to a module structure for a vessel. In the Applicant's copending application No. 91304788 (EP-A-0,460,851) there is disclosed apparatus and a method for constructing a novel double-hulled product, which as panels, modules and midbodies, are useful in the construction of vessels, in particular, bulk carriers for crude oil and other products.

The present invention relates to improvements in the products disclosed in the above-identified, earlier application, the contents of which are incorporated herein by reference.

In general, the invention relates to providing a double-hulled vessel which, compared with conventional constructions, is made with a reduced number of different pieces, a reduced complexity, which can be fabricated using a higher degree of automation, which, in many applications is more durable and/or needs less maintenance, and need not cost the 20 percent additional that a conventional double hull costs compared with a conventional single hull. In fact, in some instances, a double hull produced in accordance with the invention can successfully compete in price with a conventional single hull for the same duty and carrying capacity.

As a result of a 1970's convention entered into by the major maritime shipping nations (the "MARPOL Convention"), bulk petroleum carrier ships must have separate tanks for ballast and cargo oil. Ships thereupon necessarily become larger in overall size for carrying the same amount of cargo. Fewer bulk petroleum carrier ships were built to this requirement than had been built to serve the same market within a comparable prior period. Also, new and aggressively expanding factors in the bulk cargo vessel field sought to capture market share by cutting out what they deemed excess weight in the construction of hulls for such vessels. Part of the reduction was accomplished by using high tensile strength steel, but some was accomplished by reducing the safety margin in the thickness, spacing and redundancy of constructional elements conventionally provided to accommodate loss of strength due to corrosion occurring during the expected life of the vessel. At the same time, carrying only ballast in certain tanks of the vessel, due to requirements of the MARPOL Convention, caused accelerated corrosion. The need for better coatings was not recognized soon enough; therefore, it is now believed that many bulk cargo-carrying ships built within the last 15 years will have unpredictably short useful lives.

A conventional double-hull tanker lets ballast be carried between hulls. Such a ship does not need to be any larger, overall, than a conventional single-hull, segregated-ballast tanker.

Conventionally, fuel oil for powering the engines which propel a tanker is stored in deep tanks at the ends of the vessel. In these locations, the vessel fuel oil sometimes is located where it could easily spill, were the vessel hull to become ruptured in an accident. Accordingly, there is a need for a hull construction system which potentially can provide for storage of vessel fuel oil within closed bays of a double deck, remote from the danger of tank rupture and oil spillage.

It is believed that in the period from 1990 to 2010, the number of tankers requiring replacement or re-midbodying, assuming modest expansion of world fleet requirements, an average vessel life of 25 years, and an average vessel size of 85,000 DWT, is about 180 to 200 tankers per year.

In US-A-4,638,754 (Tornay) there is disclosed a vessel hull structure having a bottom, a deck, side walls joining the bottom and the deck, and a longitudinal vertical bulkhead wall intermediate the sides walls and substantially parallel thereto. An illustrated embodiment shows a double-hulled bottom and it is said that the side walls may also be double-walled. However, the longitudinal bulkhead which is disclosed is of a single wall construction.

According to the present invention there is provided a module structure for a vessel, comprising a bottom, a deck, side walls joining the bottom and deck, and a longitudinal vertical intermediate wall located intermediate and substantially parallel to the side walls characterised in that the intermediate wall comprises a plurality of flat plate panels; a plurality of further plate panels; a longitudinally extending series of transversally extending stiffener plates mounted to at least one face of each flat plate panel, so as to provide a plurality of stiffened flat plate panels; a first plurality of said further plate panels being arranged in a first series, in which individual ones of these panels spacedly adjoin one another, side edge to side edge, with respective gaps between them, in a single layer; a second plurality of said further plate panels being arranged in a second series, in which individual ones of these panels spacedly adjoin one another side edge to side edge, with respective gaps between them, in a single layer, so that gaps between panels in said second series are substantially in register with gaps between panels in said first series; a plurality of said stiffened flat plate panels being arranged in a series, in which one side edge of each stiffened flat plate panel adjoins a respective said gap in said first series of further plate panels and an opposite side edge thereof adjoins a respective said gap in each said second series of further plate panels; and welded joints between and among respective ones of said panel side edges in respective ones of said gaps, filling said gaps and uniting said panels.

In preferred forms of the invention, it may be arranged that each stiffened flat plate panel is elongate rectangular in outer perimetrical shape so as to have two opposite side edges, and two opposite end edges; and each further plate panel is elongate rectangular in outer perimetrical shape so as to have two opposite side edges, and two opposite end edges; said plate panels forming a plurality of longitudinally extending cells of generally rectangular transverse cross-sectional shape. Preferably said further plate panels are curved plate panels. Preferably each further plate panel is generally cylindrically arcuately curved about an axis parallel to said side edges.

Preferably a module structure according to the invention includes transversally extending bulkheads, each transverse bulkhead being perimetrically surrounded by and weldingly joined to the deck, the bottom and the intermediate wall. Preferably the transverse bulkheads are provided at one end of the module structure.

There may be provided in accordance with the invention a longitudinal midbody for a vessel comprising a plurality of module structures as set out in the preceding paragraphs, the module structures being joined one to another end to end in a longitudinally extending series, to thereby provide a vessel longitudinal midbody. There may also be provided in accordance with the invention a vessel comprising such a longitudinal midbody, a vessel bow section joined to one end of said longitudinal midbody, and a vessel stern section joined to an opposite end of said longitudinal midbody.

Yet further preferred, and/or optional features will now be set out in accordance with some aspects of the invention. It is particularly to be appreciated that the following statements relate only to preferred or optional or exemplary features, and do not set out essential features of the invention.

An improved curved-plate, double-hull tanker construction is provided, having reduced or eliminated transverse reinforcing structure in its midbody, except for bulkheads. The hull, though double, can compare in weight to conventional single hulls, despite being entirely made of mild steel plate. It is made of significantly fewer pieces, with a reduction in welding footage. More of the steel is used in the form of plate, rather than more expensive shapes. Improved productivity is possible, resulting form standarization of parts, less scrap, greater use of jigs and fixtures, automated welding, blast-cleaning and painting, so that not so much staging is needed, the work environment can be safer, and the product can be produced at a lower unit labor cost. Preferably, cathodic epoxy painting is used for durability and reduction in problems due to blast cleaning, solvent evaporation and generation of refuse. Extending the double-hull structure from the bottom and sides of the hull to the main deck can provide space for fuel oil to be located safely away from the skin of the ship, rather than in possibly vulnerable deep tanks at the stern. The constructional technique is believed to be applicable to vessel hulls in the 70,000 DWT to 300,000 DWT range. The vessel hull midbody module subassemblies may be assembled into modules, hull midbodies and vessels using the method and apparatus disclosed in the aforementioned application EP-A-0,460,851.

Embodiments of the invention will now be described by way of example with reference to the accompanying drawings in which:-
Figure 1 is a fragmentary schematic top plan view of a facility for fabricating steel plate into subassemblies of modules for double-hull, bulk-carrier (e.g., VLCC) vessel hull midbodies, embodying the present invention;
Figure 2 is a fragmentary pictorial perspective view of a station on the line shown in Figure 1, for offloading incoming steel plate from rail cars onto the line, or into storage;
Figure 3 is a fragmentary pictorial perspective view of apparatus on the line for flame cutting the steel plate into pieces of required configuration for use in fabricating the double-hull module subassemblies;
Figure 4 is a fragmentary pictorial perspective view of apparatus on the line for fabricating the cut plate into curved (at the left) and stiffened flat (at the center and right) panels that will later be assembled with one another to create the module subassemblies;
Figure 5 is a schematic top plan view of a press assembly for producing the curved plates;
Figure 6 is an end view of the press assembly of Figure 5, showing the assembly about to be closed on a piece of plate stock for press-forming a curved panel therefrom;
Figure 7 is an enlarged scale end view of a portion of the press assembly of Figure 6, showing a retractable means for conveying an edge of the plate stock at the hinge side of the press assembly;
Figure 8 is a front elevation view of a station for surface preparation of flat panel by grinding a succession of clean stripes on a surface so that respective stiffeners can be placed thereon and welded thereto;
Figure 9 is a larger scale fragmentary elevation view of the surface preparation station shown in Figure 8;
Figure 10 is a fragmentary cross-sectional view on line 10-10 of Figure 9;
Figure 11 is a fragmentary pictorial perspective view showing a repair station on the line, for stiffened panels, and a station for surface preparation and coating of both curved and stiffened flat panels;
Figure 12 is a fragmentary pictorial perspective view showing a fixture (shown empty) for receiving the coated curved and stiffened flat panels which are to be joined at respective edges to form a subassembly for a module of a double-hull midbody for a bulk cargo vessel;

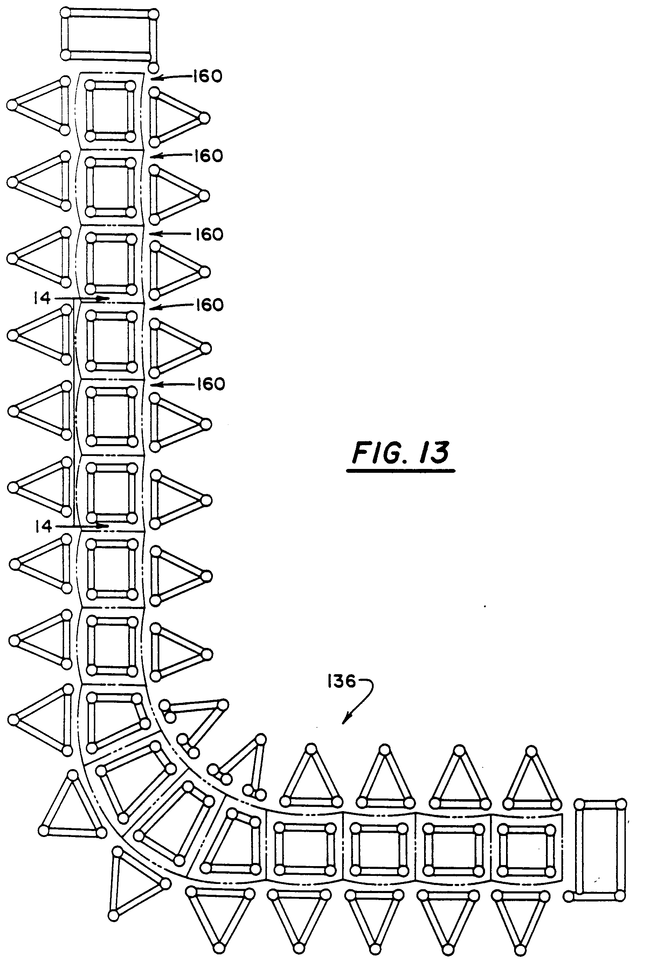

Figure 13 is a diagrammatic top plan view of the fixture of Figure 12;

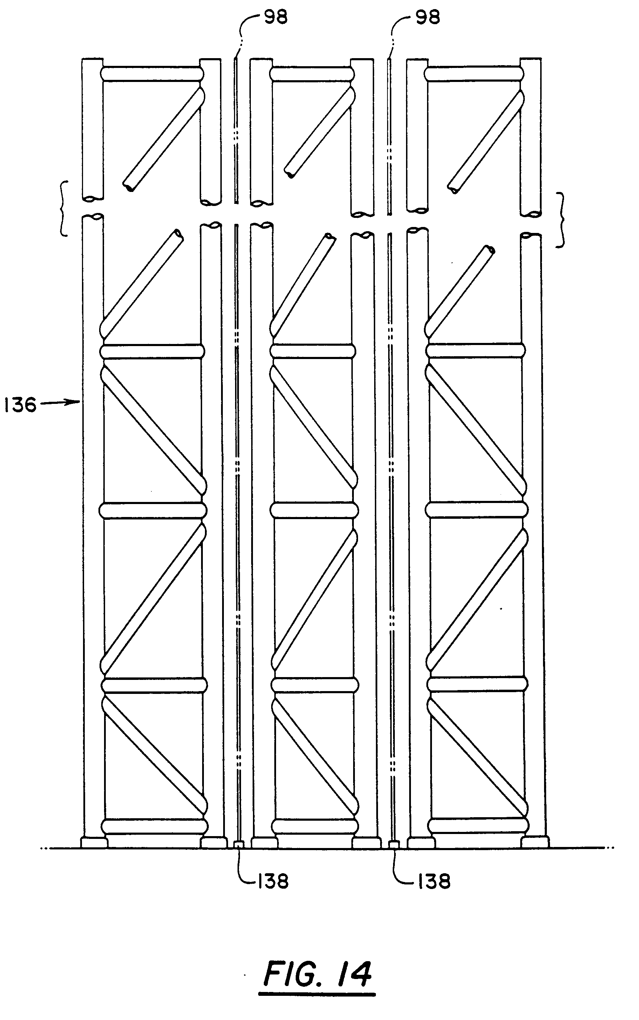

Figure 14 is a fragmentary vertical longitudinal sectional view on line 14-14 of Figure 13, showing two flat panels lowered into place in the fixture of Figure 12;
Figure 15 is a fragmentary pictorial perspective view showing one coated, curved plate being lowered into place in the fixture of Figure 12;
Figure 16 is an enlarged scale fragmentary top plan view of the fixture of Figure 12 after a complete set of flat and curved panels has been lowered into place and devices that will be further explained with reference to Figures 17-22 have been activated for holding the panels in place for welding of edge joints between respective adjoining edges of respective panels;
Figure 17 is a even larger scale fragmentary top plan view of part of the structure shown in Figure 16;
Figure 18 is a horizontal transverse sectional view of one leg element of one tower of the fixture of Figure 12, showing the stationary tube of one manual activating mechanism for a flat panel, and, in elevation, the extensible, latchable member of that manual activating mechanism;
Figure 19 is a fragmentary elevational view, partly in section, one of the manually activating devices used for aligning top edges of respective ones of the curved and flat panels in the fixture of Figure 12;
Figure 20 is a fragmentary top plan view of one of the activating mechanisms used for removing local unfairness of respective ones of the curved and flat panels disposed in the fixture of Figure 12;
Figure 21 is a fragmentary side elevation view of the activating mechanism of Figure 20;
Figure 22 is a top plan view showing how two curved panels and one flat panel are supported in the fixture of Figure 12 at an adjacent the site where a three-edge T-joint will be welded, in particular showing where pressure is applied by respective fairing aids of Figures 20 and 21, and respective copper backing bars of Figures 23-28;
Figure 23 is an enlarged scale horizontal transverse cross-sectional view of one copper backing bar and an actuator therefor;
Figure 24 is a fragmentary side elevation view of the structure shown in Figure 23;
Figure 25 is a fragmentary pictorial elevational view showing electrogas welding of a T-joint among adjacent edges of two coated curved panels and one coated stiffened flat panel, all as held in the fixture of Figure 12;
Figures 26, 27 and 28 are fragmentary horizontal transverse cross-sectional views of respective portions of subassembly being fabricated in the fixture of Figure 12, showing the plate edges, copper backing bars and copper sliding shoes at sites where three different types of joint configurations are being welded for respective portions of the double-wall vessel hull module subassembly;
Figure 29 is a fragmentary pictorial perspective view showing a module subassembly being removed from the fixture of Figure 12 following completion of welding of the welded joints which interconnect the various curved and flat panels along their respective edges;
Figure 30 is a fragmentary pictorial perspective view showing the fixture of Figure 12, an adjacent facility used for surface preparation and touch-up coating of the subassembly for repairing damage to the coating earlier provided on the panels caused by the electrogas welding depicted in Figure 25 (including the adjoining crane of Figures 12 and 15, that was used for lowering curved and flat panels into the fixture), and a surface preparation and coating touch-up facility for the subassembly, which is brought thereto by the floating crane of Figure 29;
Figure 31 is a fragmentary pictorial perspective view, partly broken away for showing the interior of a subassembly cell, illustrating surface preparation and touch-up coating of the interior walls of the cell;
Figure 32 is a fragmentary pictorial perspective view showing the locations of two adjacent stations for assembly of respective transverse bulkheads, and a set of module subassemblies being assembled onto a transverse bulkhead at one of these stations, for creating a module for a midbody of a double-hulled vessel;
Figure 33 is a fragmentary diagrammatic end view of a completed module embodying the present invention at an open end;
Figure 34 is a fragmentary diagrammatic end view of a completed module embodying the present invention at an end closed by a transverse bulkhead;
Figure 35 is a fragmentary vertical longitudinal sectional view of the module of Figures 33 and 34, showing a typical shape and position for a transverse bulkhead;
Figure 36 is a fragmentary pictorial perspective view showing initiation of a step of lowering a completed module from the assembly area of Figures 32-35 into the water;
Figures 37-41 schematically show successive steps in tilting over the floating module, from the vertical orientation in which it was fabricated and assembled, to a horizontal orientation, for joining in series with others, to provide a vessel midbody;
Figures 42 and 43 are, respectively, fragmentary side elevational and top plan views of a facility in which modules are successively joined to create a vessel midbody;
Figure 44 is a diagrammatic perspective view thereof (with the water omitted);
Figure 45 is a larger scale fragmentary vertical transverse sectional view of the facility of Figures 42-44, at the location where one end of one module is being welded to an abutting end of a previously placed module;
Figure 46 is a fragmentary top plan view of the left side of the structure shown in Figure 45; and
Figure 47 is a side elevational view of a VLCC having a midbody constructed in accordance with the principles of the present invention, conventionally joined with a conventional bow section and stern section.

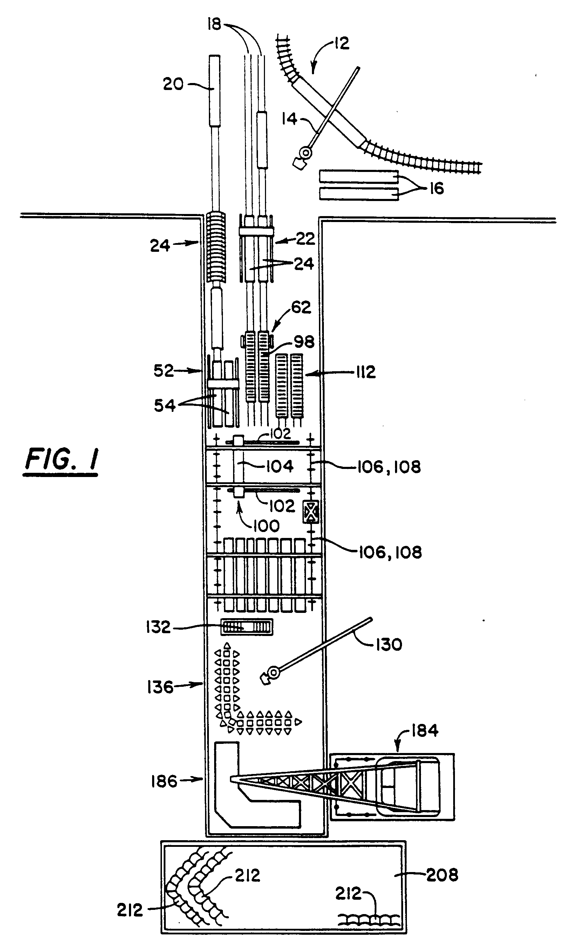

Referring first to Figure 1, a facility for transforming steel sheets into subassemblies for modules for double-hulled longitudinal midbodies of bulk cargo carriers is shown at 10.

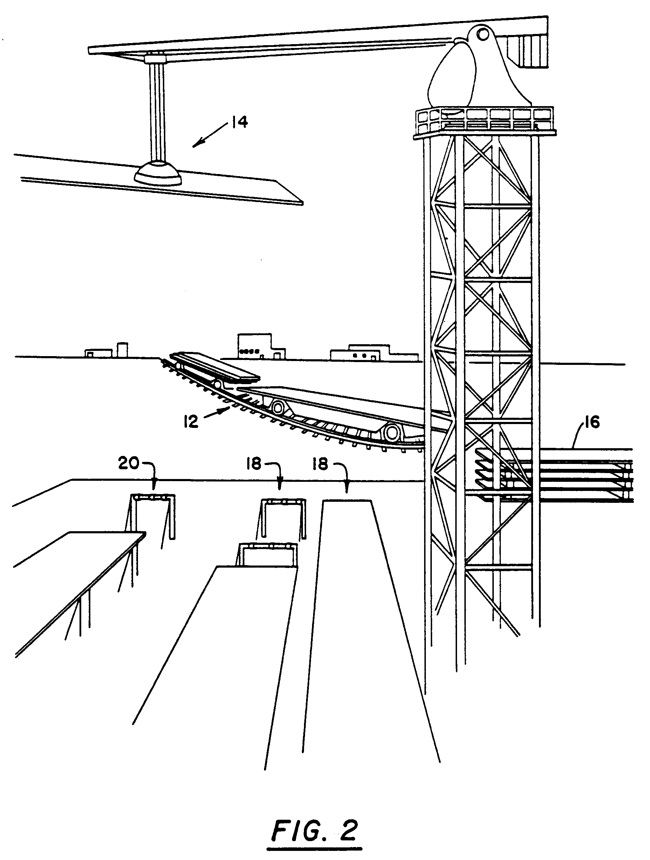

Raw steel plate, typically 0.5 to 1.25 inch thick and approximately 8 feet wide and 50 feet long, procured from a steel mill, is received by rail car 12 (Figures 1 and 2), lifted off by an electromagnet-type grasping device-equipped crane 14 and placed either in storage 16, on one of two conveyor lines 18 feeding flat panel fabrication, on a rail car with an installed conveyor called a collocator car (not shown), or on a conveyor line 20 feeding curved panel fabrication.

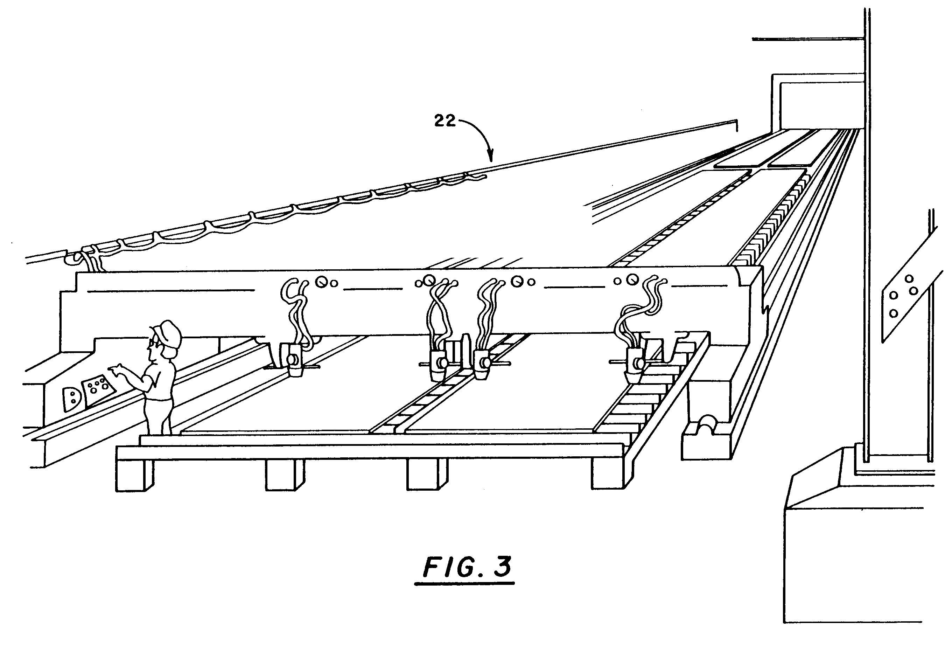

Raw steel plate destined for stiffened flat panels is conveyed on the lines 18 to an automatic burning machine 22 (Figures 1, 3 and 4) where it is cut to final configuration, including any lightening holes (not shown, but see the Cuneo et al. application) to provide flat steel plates 24.

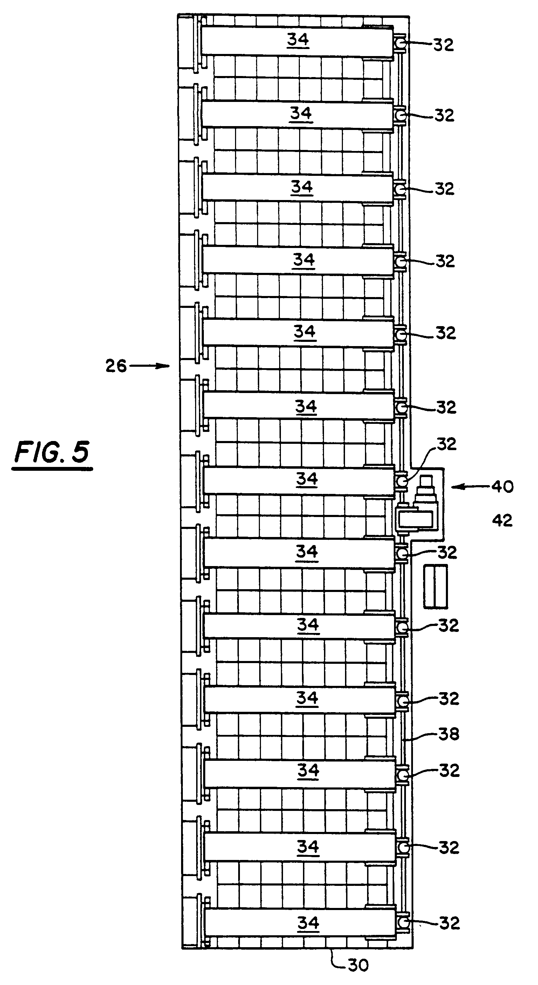

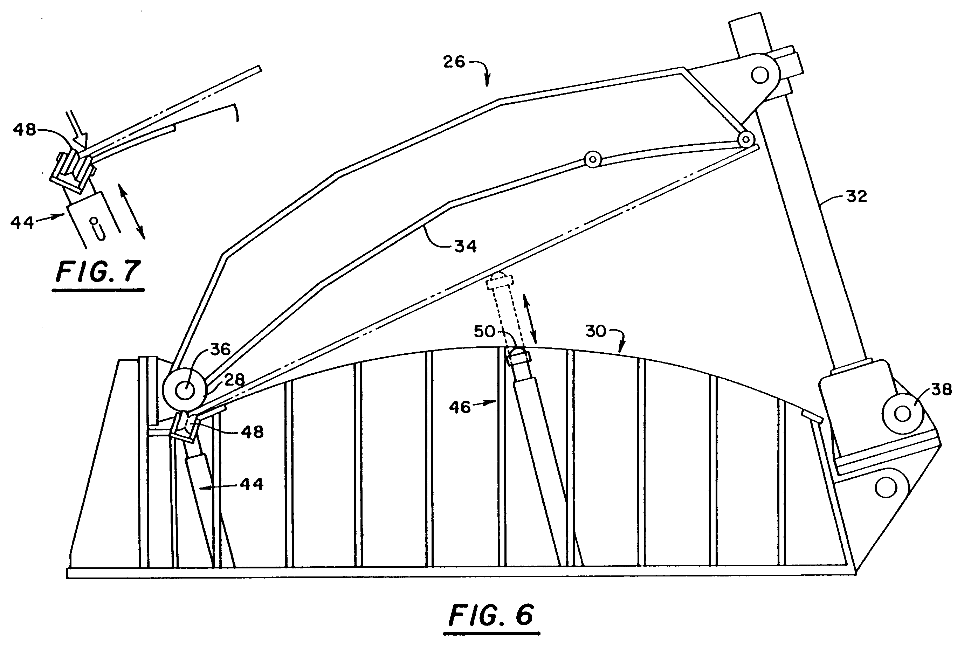

Raw steel plate destined for curved panels is conveyed on the line 20 to the plate forming machine 26 (Figures 1 and 5-7), preferred details of which are shown in Figures 5-7, to produce curved steel plates.

The plate forming machine 26 puts a constant radius curve in a succession of steel plates each approximately 8 feet wide and 50 feet long by holding one longitudinal edge of a raw steel plate in a holder 28 and bending the plate along its transverse axis over an upwardly convex stationary die 30 using a series of hydraulically operated screw jacks 32 attached to a series of downwardly concave forming presses 34. The screw jacks 32 of the preferably forming presses 34, hinged at 36 to the stationary base at an edge of the stationary die 30 are operated simultaneously by a common shaft 38 driven by a hydraulic power plant 40 through a reduction gear 42. The fixed side of the plate is held by a series of cams 28 built into the forming presses. The stationary die 30 is fabricated of steel in an "egg crate" type weldment, so that upper edges of its elements cooperate to define the die. Retractable plate conveying devices 44, 46 are built into the plate bending machine. The devices 44, 46, respectively, have v-grooved and convex rimmed rollers 48, 50 at their plate edge and plate underscale engaging upper ends.

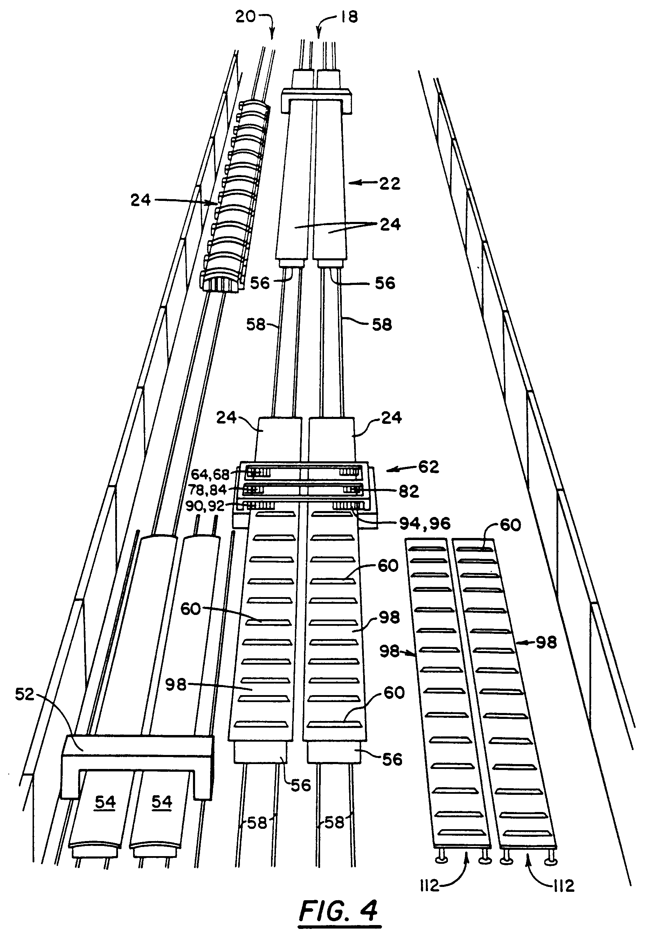

The resulting curved but still not sized steel plates are then conveyed on the line 20 to a flame planer 52 (Figures 1 and 4), similar to automatic burning machine 22 for flat stiffened panels, where they are cut into precise final configuration to provide curved steel plates 54.

Each collocator car 56, comprises a rail car with a roller conveyor on its deck, receives a respective fabricated flat steel plate approximately 8 feet wide and 50 feet long from the automatic burning machine 22 and locates the steel plate in a precise position on the car.

The flat steel plates 24 are transported by respective collocator cars 56 on rails 58 which continue the flat panel lines 18 (Figure 4) where kickplate stiffeners 60 are installed at precise intervals (typically of approximately 32 inches) in a three-stage stiffener installation mechanism 62 (Figures 1 and 4). In order to facilitate this, each collocator car 56, on which a respective flat steel plate 24 is resting, advances by indexing forwards at the same precise intervals using an appropriate gear mechanism.

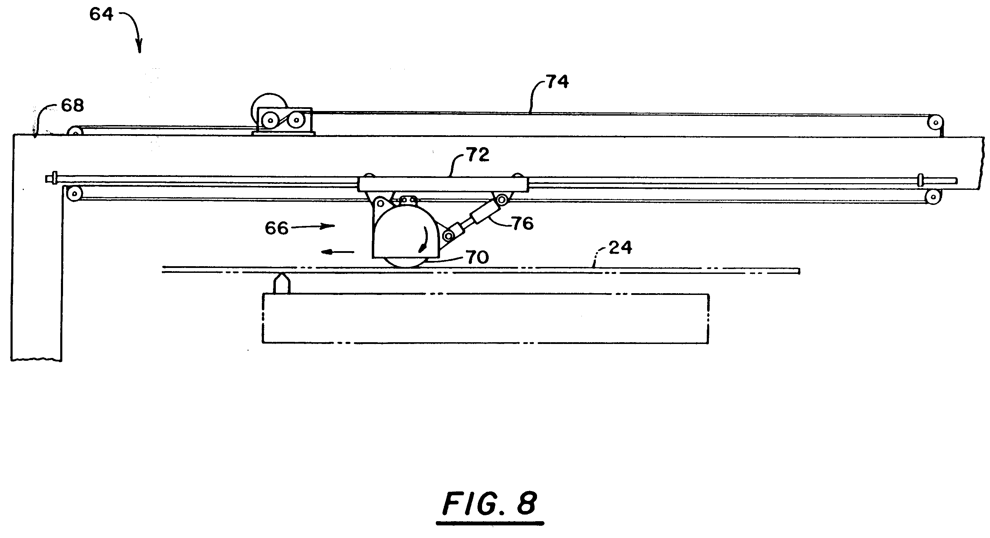

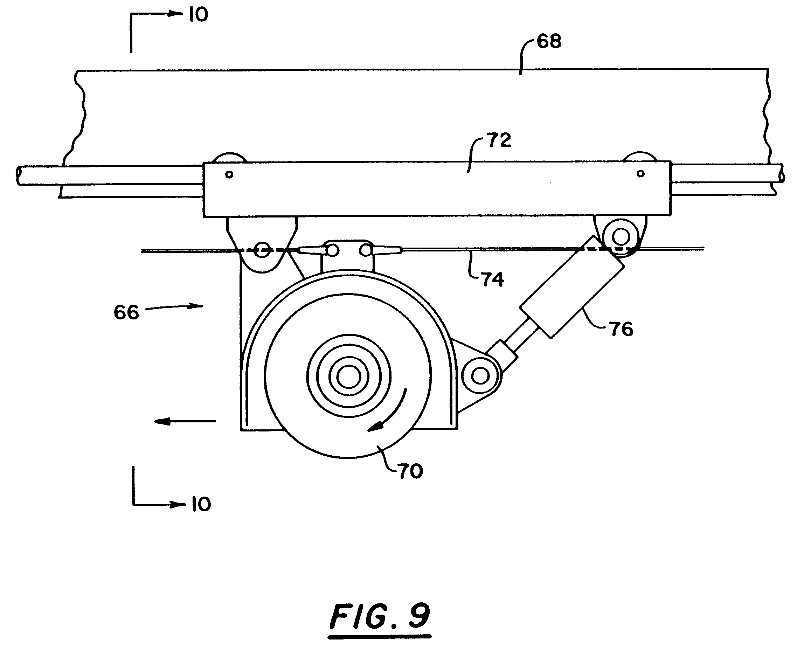

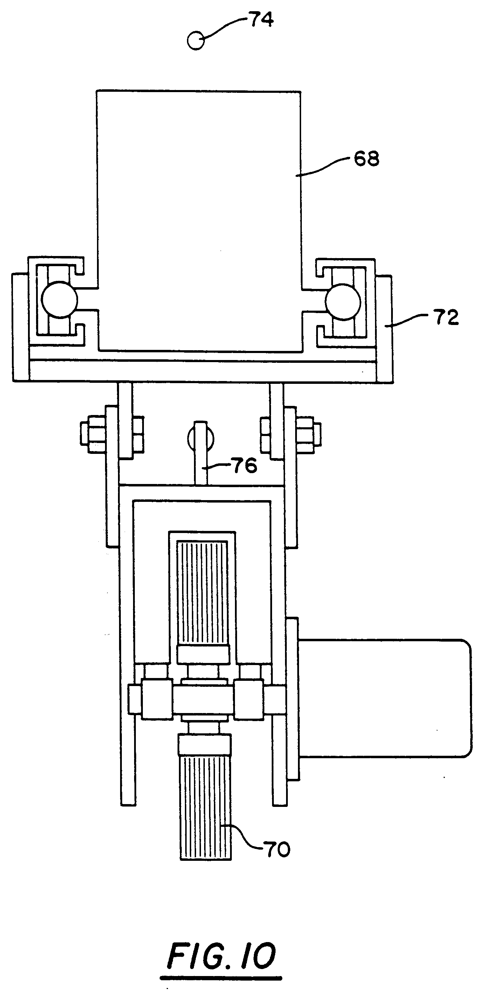

The first stage, 64 (Figures 1, 4 and 8-10), of this stiffener installation mechanism utilizes a grinding machine 66 to remove an approximate 2-inch wide path of mill scale in the way of where each stiffener 60 will be installed. The grinding machine 66 comprises a fixed gantry 68 containing one or more power-rotated grinding wheels 70 mounted on a carriage 72 running transverse to the line of travel of the collocator cars 56, which remove a path of mill scale approximately 2 inches wide in successive precise increments of approximately thirty-two inches as each collocator car 56 is indexed from position to position beneath it. The grinding wheel carriage 72 is electrically driven through a belt or chain mechanism 74 across the gantry. A pneumatic cylinder 76 holds the grinding wheel 70 to the plate with proper force.

The second stage, 78, of the stiffener installation mechanism, receives stiffeners from a kickplate stiffener collator 80, precisely fits and holds each stiffener 60 in its turn to a respective location, which has previously been cleaned of mill scale at 64, and tack welds each stiffener, using a tack welder 82, to the flat plate 24. The second stage 78 includes a fixed gantry 84, located a precise distance of approximately thirty-two inches after the grinder gantry 68, running transverse to the lines of travel of the collocator cars and having for each line a guide 86 into which a succession of identical kickplate steel flat-bar stiffeners 60 is inserted one by one as the collocator cars are indexed from position to position beneath the fixed gantry 84. The fixed gantry 84 is equipped with a mechanical, hydraulic or pneumatic mechanism to lower the guides 86 and compress each successive stiffener 60 onto the respective flat plate 24, to enable the stiffener 60 to be tack-welded to the plate using gantry-mounted tack welders 82, and then to raise the guides to permit the collocator cars 56 to index to the next position.

Each kickplate stiffener collator/inserter 80 is a device onto which a bundle of approximately eighteen identical kickplate stiffeners each approximately seven feet long, six inches deep and one-half inch thick is loaded as each fifty-foot long flat plate is processed. Individual kickplates 60 are oriented transverse to the line of flow of the respective collocator car and stacked side by side in the direction of the line of flow of the respective collocator car. The lead kickplate 60 is positioned alongside the opening to the respective guide 86 of the kickplate positioning gantry 84 and inserted into the guide 86 by use of a mechanical, electrical, pneumatic or hydraulic plunger 88 as the respective collocator car 56 and flat plate 24 are indexed into position. Each remaining stack of kickplates 60 is indexed in the same direction as the line of travel of the respective collocator car. Each time each collocator car 56 is indexed thirty-two inches forward, the respective remaining stack of kickplates is indexed one-half inch using mechanical, electrical, hydraulic or pneumatic plungers 88 calibrated mechanically or electronically to the movement of the respective collocator car. Thus, as each flat plate 24 is indexed into the kickplate installation position, a kickplate 60 is always available to be inserted.

Each collocator 80 is structured and functions similar to a transverse feeder on the head end of a magazine of a photographic slide projector.

The third stage 90 of the stiffener installation mechanism final-welds each stiffener 60 in its turn. Alternately, the second and third stages may be combined, with tack welding being eliminated. In the preferred construction, the third stage comprises a fixed gantry 92 containing for each line a carriage-mounted double fillet, flux-core welding machine 94 or substitute located a precise distance of approximately thirty-two inches after the kickplate installation gantry 78 and oriented transverse to the line of flow of the collocator car. The double fillet welding heads of the welding machine 96 are each equipped with a known seam tracker and appropriate positioning slides to compensate for slightly out-of-flatness of the respective plate 24 or minor misalignment of the kickplate stiffeners 60. The welding machines 96 perform finish welding of individual kickplate stiffeners 60 as the flat plates 24 with fitted kickplates 60 are indexed beneath it on the collocator cars 56, thereby providing stiffened flat panels 98.

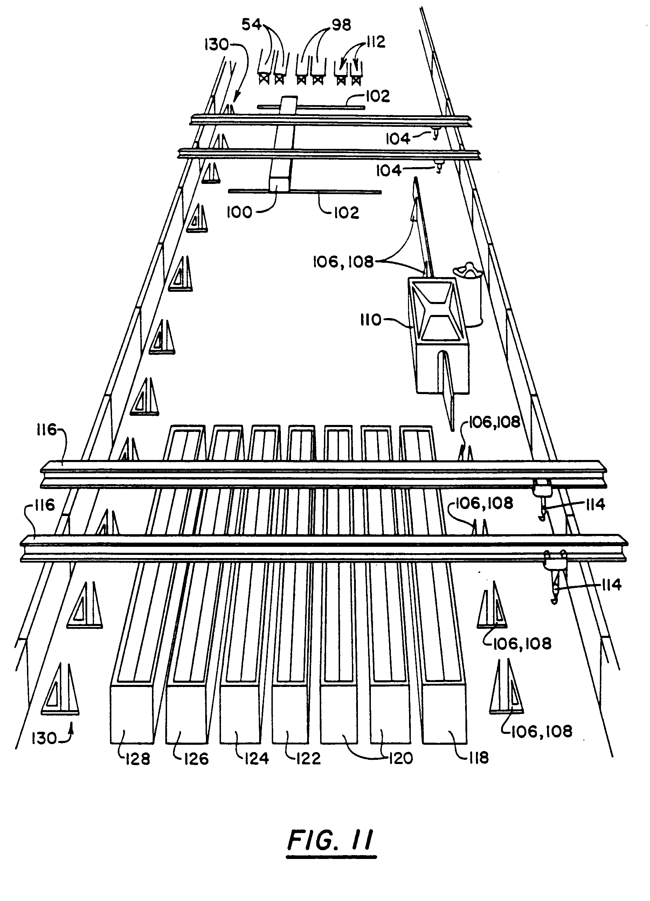

Fabricated curved panels 54 and stiffened flat panels 98 are then conveyed to a transporter car 100, which travels laterally on tracks 102, and then are lifted by hoists 104 from their horizontal positions to a vertical orientation and places it on a chain drive conveyor 106, so that each rests on one of its long edges. The chain drive conveyor 106 transports panels, through guides 108, into and out of a steel-shot abrasive cabinet 110 (Figures 1 and 11) for removal of mill scale, weld slag, weld splatter and other foreign matter.

In the shot-blast cabinet 110, recyclable steel abrasive shot or grit (not shown) is propelled automatically against all surfaces of curved and stiffened flat steel panels 54, 98 being transported through the cabinet by the chain drive conveyor 106 through guides 108 leading into and out of the cabinet. This removes all mill scale, weld slag, weld splatter and other foreign matter from the panels 54, 98.

Fabricated flat panels requiring rework are conveyed by the transporter car 100 to repair stations 112 (Figures 1 and 4) and, upon completion of repairs, are transferred to the abrasive cabinet 110, for surface preparation as described above.

After being shot blasted, curved panels and stiffened flat panels are lifted off the exit conveyor guides 108 (Figures 1 and 11) of the abrasive cabinet 110 using plate clamps 114 hung from the twin monorails 116 running transversely, and are immersed in a rinse tank 118 containing deionized water.

The plate clamps on the twin monorails 116 transport the shot-blasted panels 54, 98 laterally through the five or more positions of the coating process of which the rinse tank 118 is the first.

The rinse tank 118 contains deionized water and is large enough to accommodate one or more of the panels 54, 98 in a vertical position on one of its respective long edges during its rinse, after abrasive cleaning in the shot blast cabinet 110. A wash and pretreatment process is conducted in the rinse tank 118, plus sufficient tanks 120 for two or more subsequent chemical wash and pretreatment stages.

After chemical wash and pretreatment, the next position of the coating line is a cathodic coating tank 122 containing a paint and water solution and large enough to accommodate one or more of the panels for receiving an initial coating, still in a vertical position. The tanks are provided with fenders (not shown) to protect the coating.

The first coating tank preferably contains epoxy paint in water solution, and in it, each panel is cathodically coated, the coating process commercially available from PPG Coatings called Power Cron 640 conductive epoxy primer being presently preferred.

The next position is a curing position 124 with infrared or other surface heaters (not shown) large enough to accommodate one or more of the panels after its initial coating in a vertical position, with fenders (not shown) to protect the coating.

At this curing position 124, the first coating on the curved and flat panels is cured in the infrared-heating cabinet at approximately 350°F.

The next position is a second cathodic coating tank 126 similar to the one at the second position.

After curing at the first curing position 124, the curved and flat panels are immersed in the second coating tank 126 for a second cathodic coat of preferably the same type of epoxy paint, thereafter are removed to a second infrared heating cabinet 128 at a fifth position, for curing, and then stored vertically on their long sides in a storage rack 130 for inspection, with suitable fendering being provided to protect the coating.

The coated panels are then inspected. Inspection criteria include handling damage to the coating, adhesion of the coating to the steel panel, thickness of the coating (normally 2.9 to 3.5 thousandths of an inch (mils.), and curing (hardening).

Curved and stiffened flat panels with unacceptable coatings are conveyed back to the transporter car 100 for reprocessing through the entire surface preparation and coating processes.

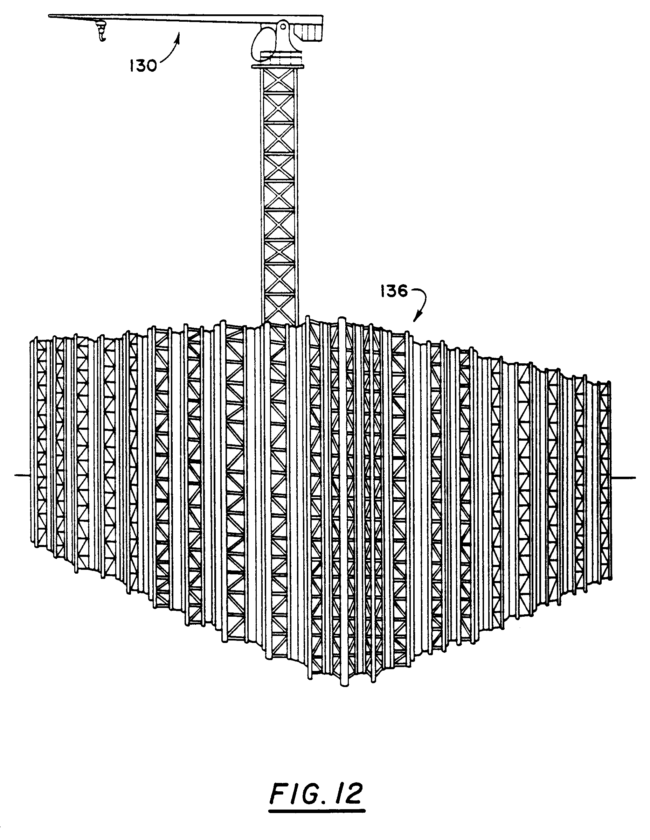

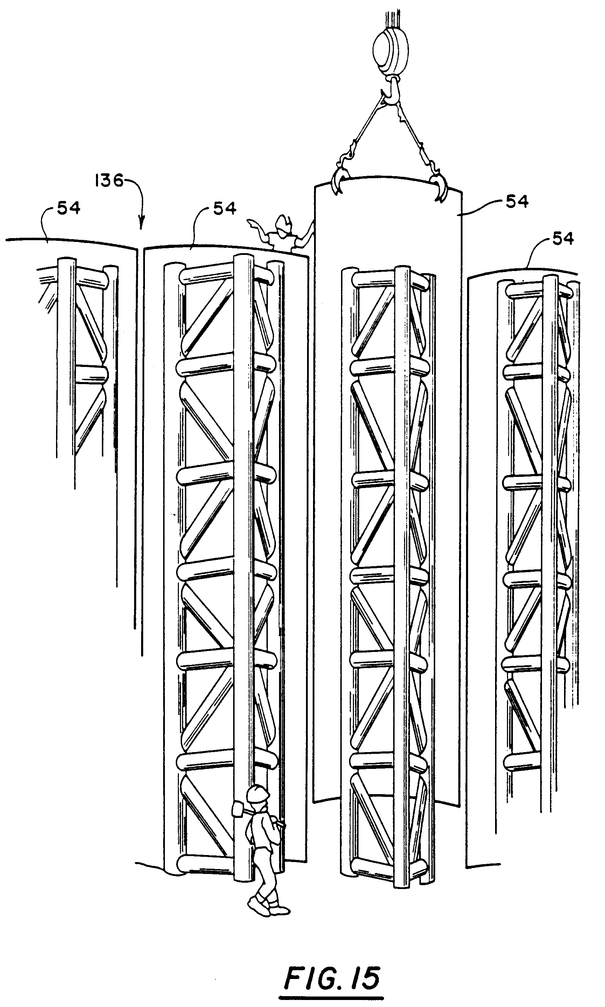

Curved and stiffened flat panels with acceptable coatings are lifted by a crane 130 (Figures 1 and 12), still in a vertical position on their respective end edges and placed either in buffer storage 132 or directly in the subassembly fixture 136 (as shown in Figure 15).

In the buffer storage 132 or fixture 136, the bottom edges of the curved and flat panels being stored or loaded into the fixture are aligned by landing them in guides 138.

The guides 138 provided at the bottom of the fixture 136 are used for precisely positioning the bottom edges of the curved and stiffened flat panels as they are lowered by crane into the fixture 136, without using temporary attachments.

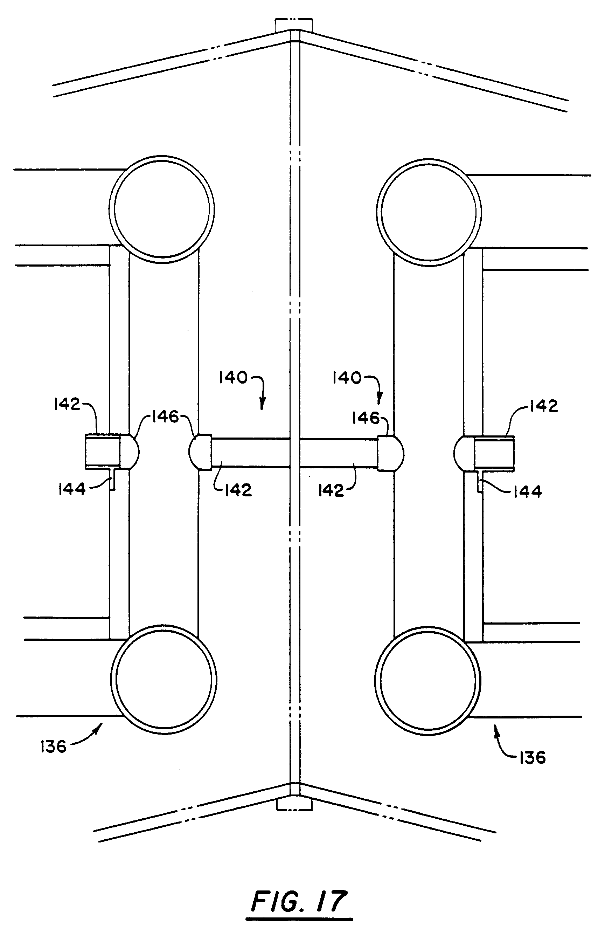

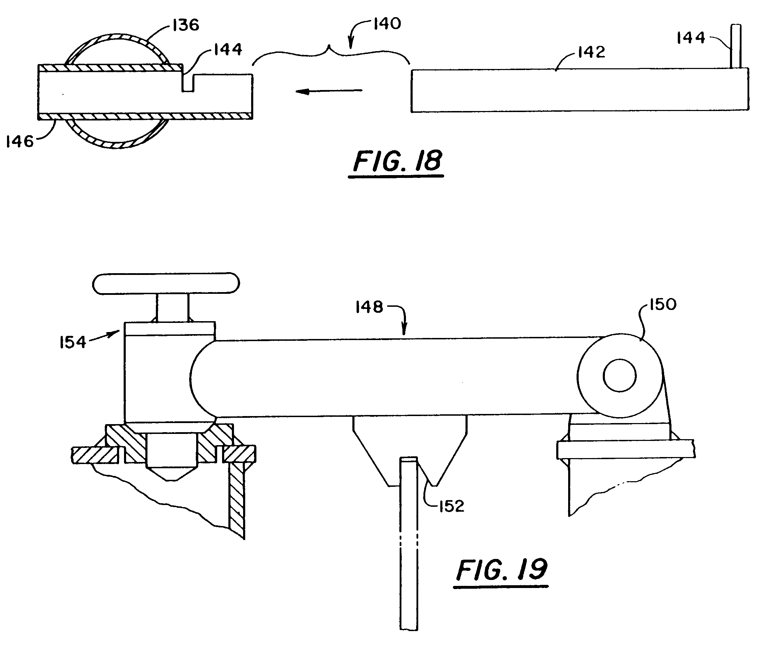

In the fixture 136, buckling of the stiffened flat panels is prevented by manually activating mechanisms 140 (Figures 17 and 18).

Each device 140, a plunger 142, which manually telescopes into and locks at 144 in a fixture leg tube 146, holds a flat stiffened panel in position, to keep the panels from buckling without using temporary attachments.

The top edges of the curved and flat panels are aligned by manually activating devices 148 (Figure 19).

The devices 148, hinged to one fixture leg at 150, notched at 152 to receive a plate edge and clamped to another fixture leg at 154 precisely position the tops of the curved and flat, stiffened panels, without using temporary attachments.

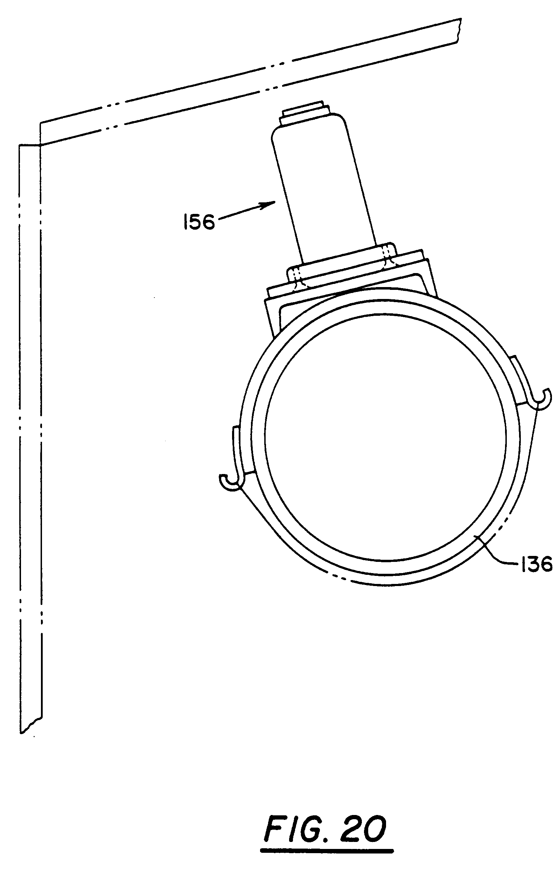

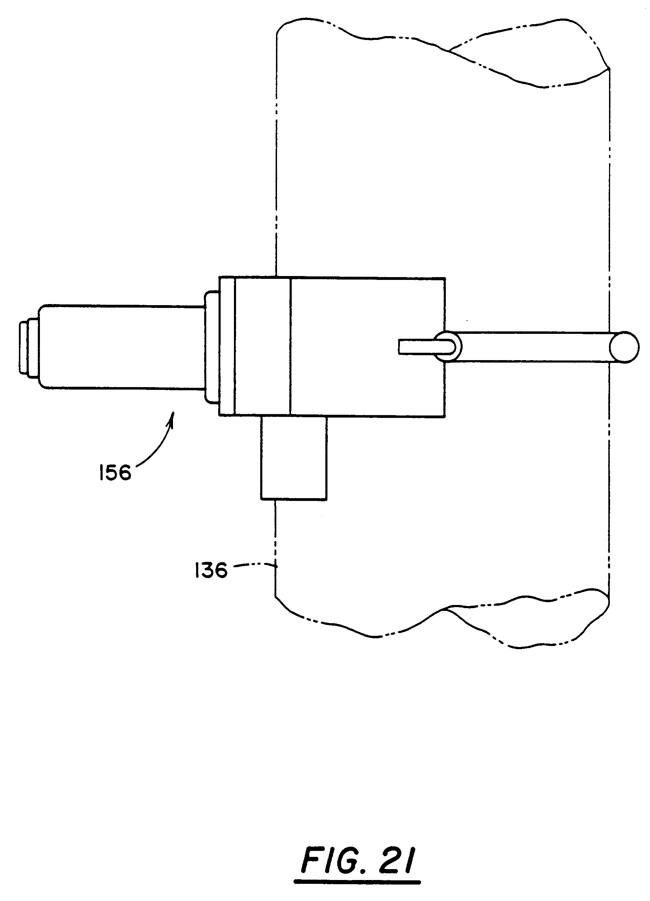

Local random unfairnesses throughout the height of curved and flat panels disposed in the fixture 136 are removed by activating mechanisms 156 (Figures 20 and 21).

The devices 156 apply external pressure at intermediate positions on either face of respective curved or flat plate panels to bring unfair edge portions of those plates into precise welding position, without using temporary attachments. Devices 156 are hydraulically operated and are portable, and can be moved around the fixture 136 and secured to legs or leg braces, as needed, and hydraulically activated to forcefully engage and thus fair the panels as required.

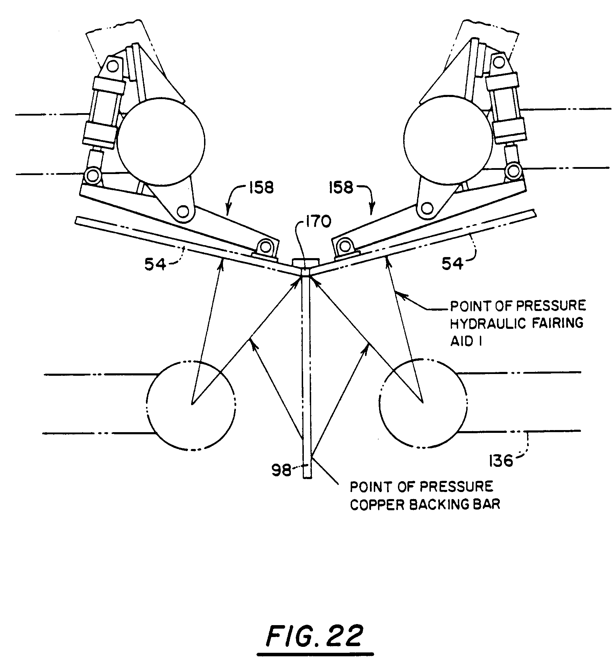

The hydraulically operated devices 158 (Figure 22) are operated to apply external pressure at intermediate positions along edges of the curved plate panels to positively position the edges against the continuous copper backing bars (to be described). Devices 158 are hydraulically operated and are fixed to legs of the fixture 136.

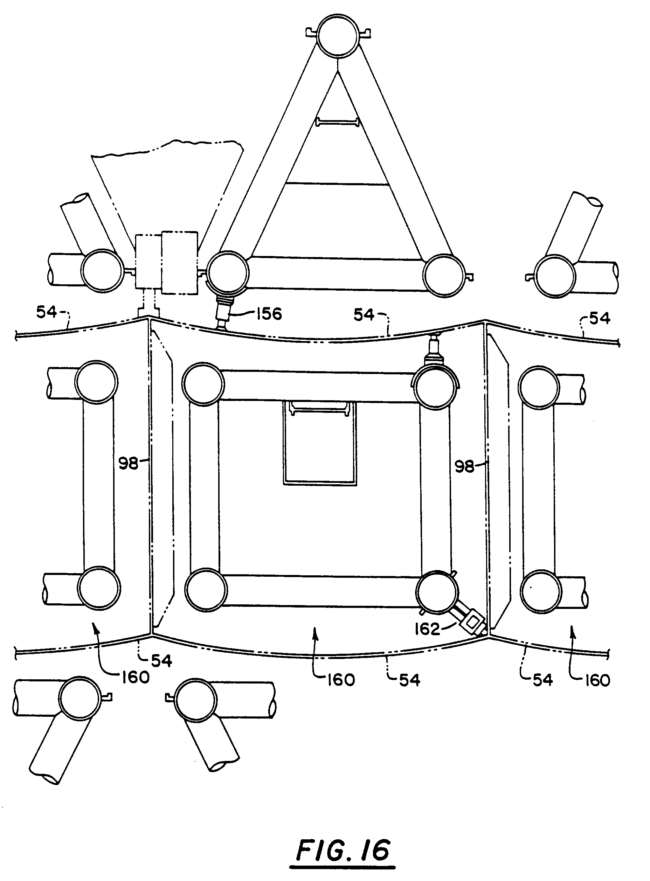

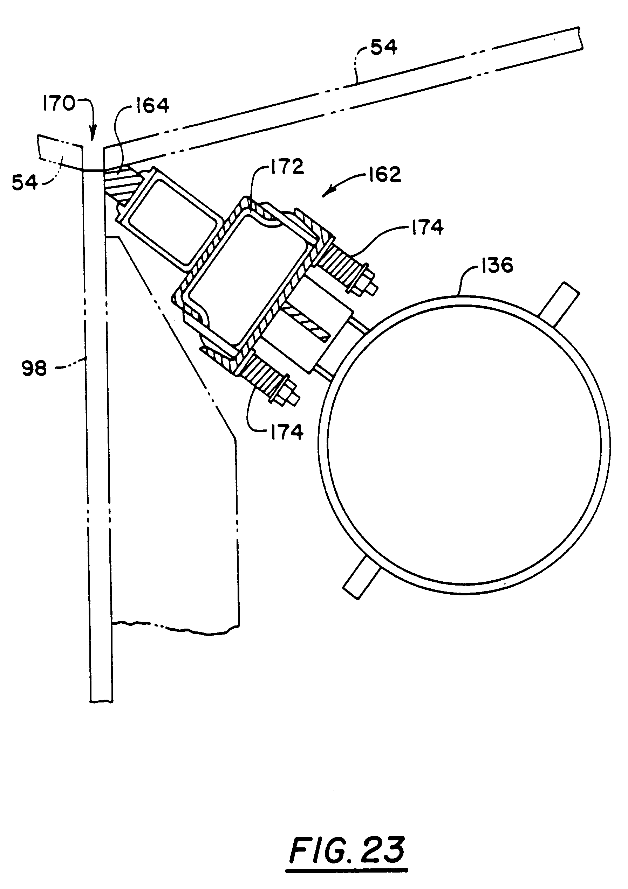

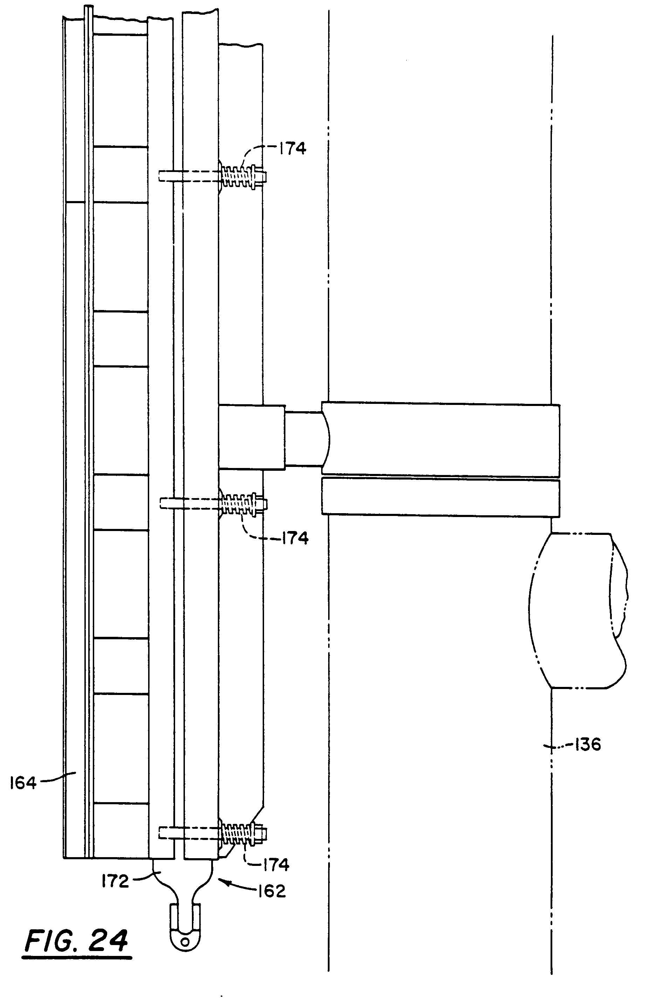

After all of the curved and flat panels have been brought into proper alignment in a given cell 160 of the fixture 136, mechanisms 162 (Figures 16, 23 and 24, only respective ones of which are shown), located in each of the four interior corners of each cell 160, are activated to position the continuous copper backing bars 164, 166, 168, which are variously of the cross-sectional configurations shown in Figures (23, 24, 27) 26 and 28.

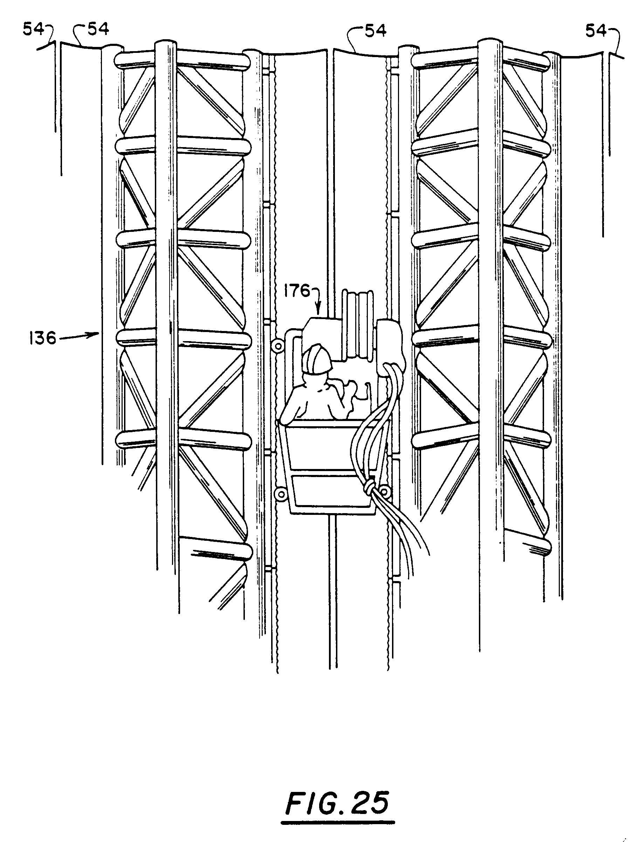

The devices 158 position the continuous copper backing bars 164, 166, 168 in internal corners of each near intersection 170 between adjacent edges of curved and stiffened flat panels 54, 98. The backing bars 164, 166, 168 are positioned pneumatically in the valley formed by edge margins of two respective panels, by inflating a flexible hose 172, thus forcing the backing bar 164, 166, 168 with positive force into damming relationship with the two panels near the intersection. When the electrogas welding (of Figure 25) is completed, air pressure is released from each hose 172 and a spring mechanism 174 returns the backing bars 164, 166, 168 to their original retracted positions.

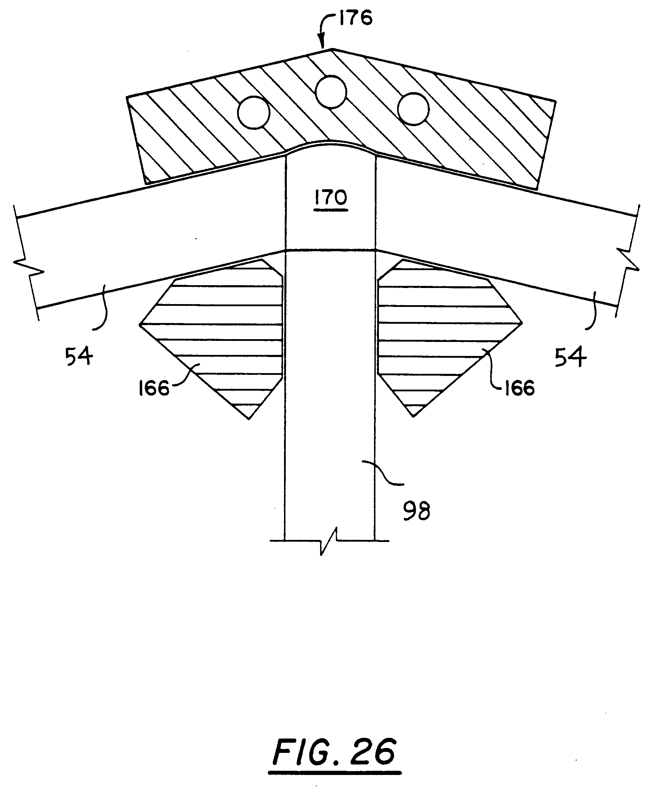

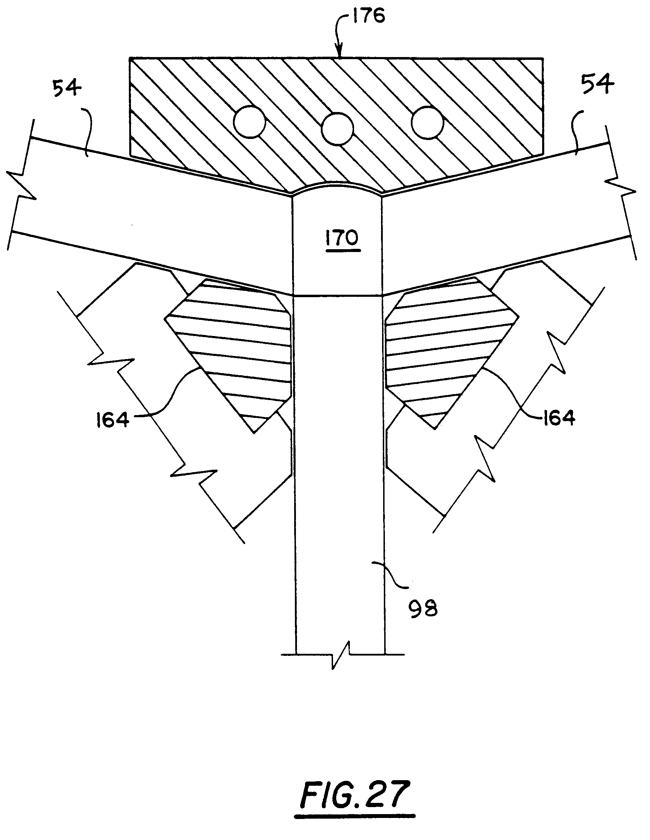

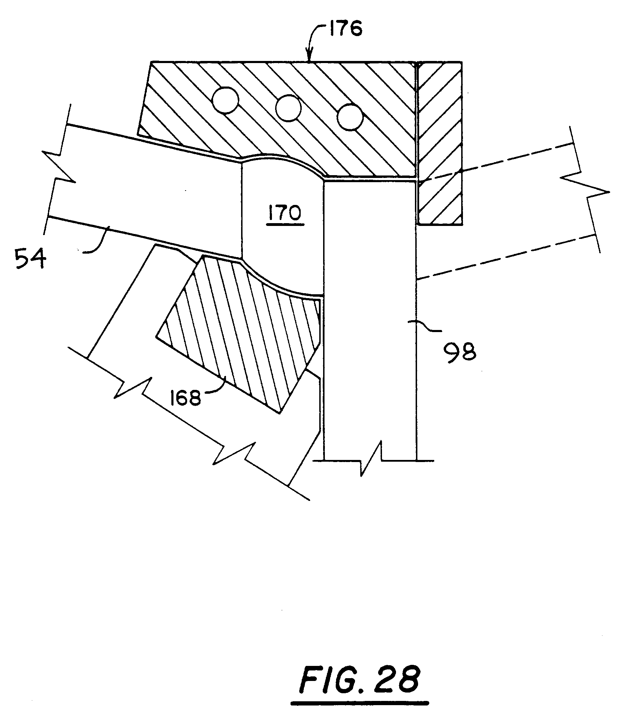

After the curved and flat panels 54, 98 are brought into alignment and the interior copper backing bars 164, 166, 168 are in extended, damming position, weld joints, joining three or two panels simultaneously, with transverse cross-sections shown in Figures 26, 27 or 28, are welded, using a vertical electrogas welding machine (Figure 25). As welding machine 176 vertically rises, it is followed by a vacuum-blast nozzle, or needle gun 178, which removes exterior welding slag, welding splatter, burned paint, and foreign matter. The cleaned surface is then primed and finish painted by the weld machine operator, e.g., using a paint spray applicator 180 as the operator lowers the welding machine 176.

After electrogas vertical welding is complete and exterior of the welds have been prime painted, the panel and backing bar alignment devices 140, 148, 156, 158 and 162 are released.

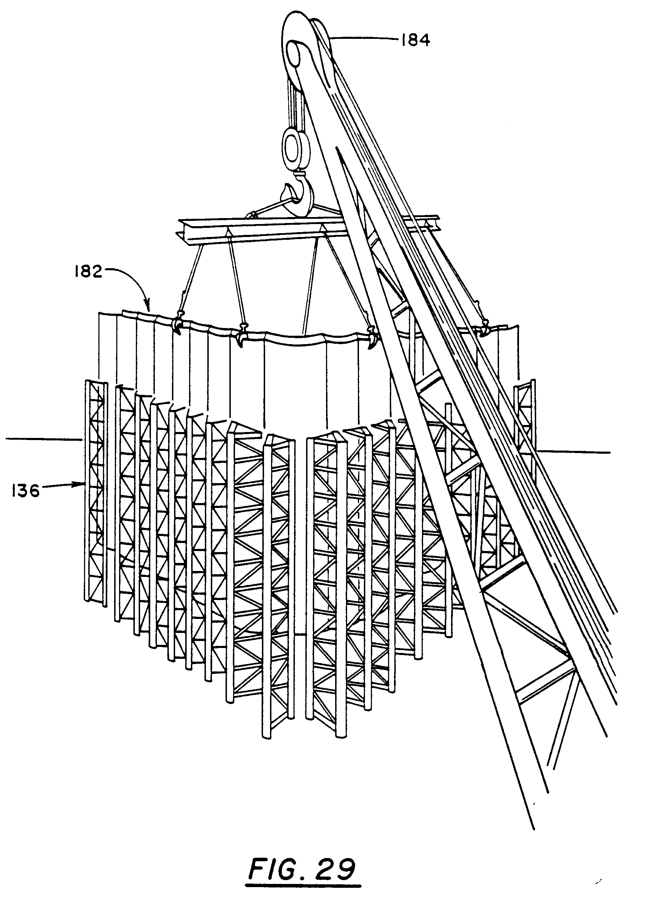

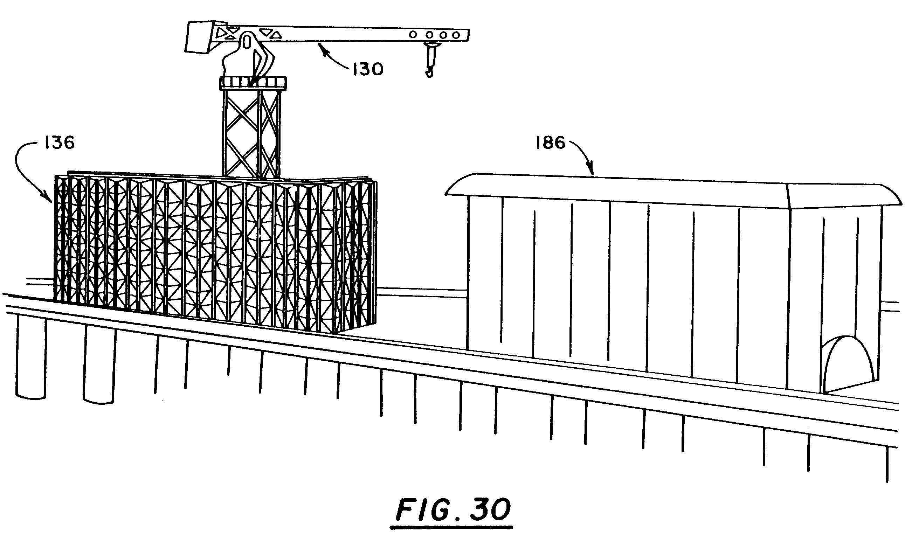

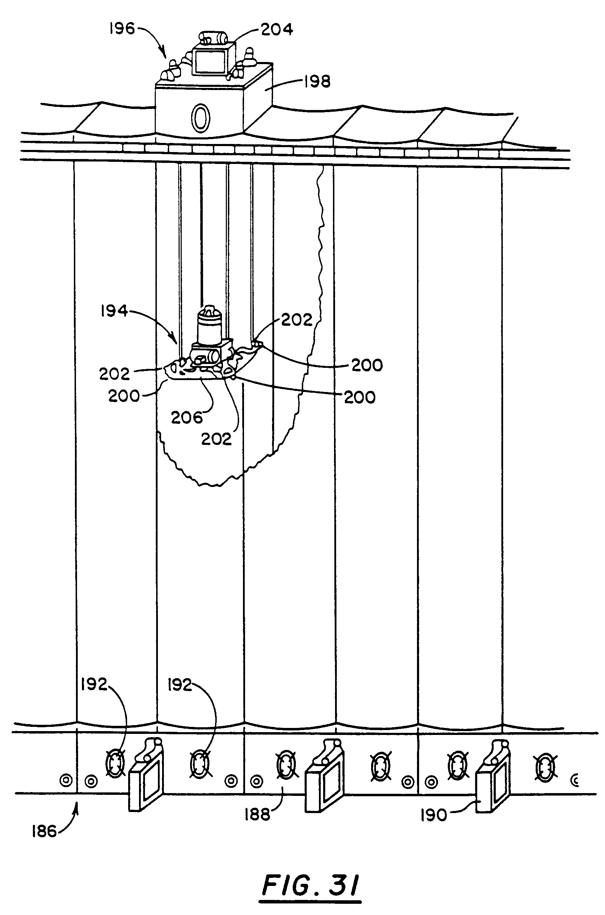

The painted subassembly 182 of panels and welds is then lifted from the fixture by a floating derrick 184 (Figures 1, 29, 30 and 31) and placed in a subassembly touch-up blast and paint facility 186 (Figures 1, 30 and 31).

The main purpose of the touch-up blast and paint facility 186 is to repair interior cell coating damage caused by subassembly welding along interior edges of joints formed at 170 which form the intersection of curved panels 54 and stiffened flat panels 98. The facility 186 includes a supporting structure 188 for the subassembly, with a built-in plenum for intake air to each interior cell 160 of the subassembly including means 190 for dehumidifying intake air and heating it, using steam coils or some other non-explosive means, and, in addition, a means of access 192 to the bottom of each cell 160 to service vacuum-blast and paint equipment 194.

The facility 186 further includes a touch-up blast and paint elevator platform mechanism 196 having a cover 198 which extends over a single interior cell 160 at a time and is adequate for weather protection of that cell.

The cover 198 is provided with an elevator platform 194 having four vacuum-blast nozzles 200 and four paint-spraying nozzles 202, one of each for each interior corner of a respective cell. The platform is suspended from the bottom of the cover at all four corners by a wire rope and pulley arrangement 196 which permits synchronous raising of each corner of the platform at speeds appropriate for both automatic vacuum blasting and automatic spray painting of corners of each individual subassembly cell where welding along the edges of the panels has damaged the coating.

An explosion-proof exhaust fan 204 is mounted in the cover 198, with replaceable filters that are capable of entrapping the paint overspray which will be created by spray painting repaired areas of coating along vertical edges at intersection of curved and stiffened flat panels damaged by welding.

The vacuum-blast machine 194 is mounted on the platform and has four nozzles 200 which are oriented toward the four interior corners of the subassembly cell to accomplish recyclable abrasive blasting of areas along panel edges where the coating has been damaged, in order to remove burned paint, weld slag, weld splatter and other foreign material as the platform is raised in an appropriate speed.

Similarly, four appropriate spray painting nozzles 202 with appropriate supporting air and paint hoses are attached to the platform 206 and oriented toward the interior corners of the respective subassembly cell 160 to enable spray painting of areas vacuum blasted above as the platform is raised at an appropriate speed.

The subassembly 182, after this cleaning and painting, is lifted from the touch-up blast and paint facility 186 using the floating derrick 184, and located onto a barge 208 (Figure 1) for delivery to another location in the shipyard (or to another shipyard altogether) for subsequent module assembly, module erection and tanker longitudinal midbody construction and tanker completion, e.g., using the method and apparatus which is disclosed in more detail in the aforementioned application of Applicant.

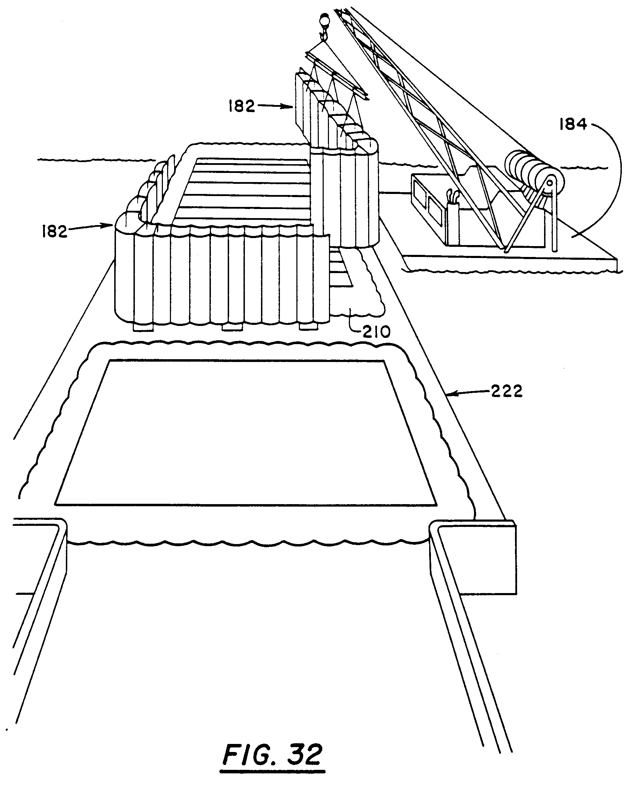

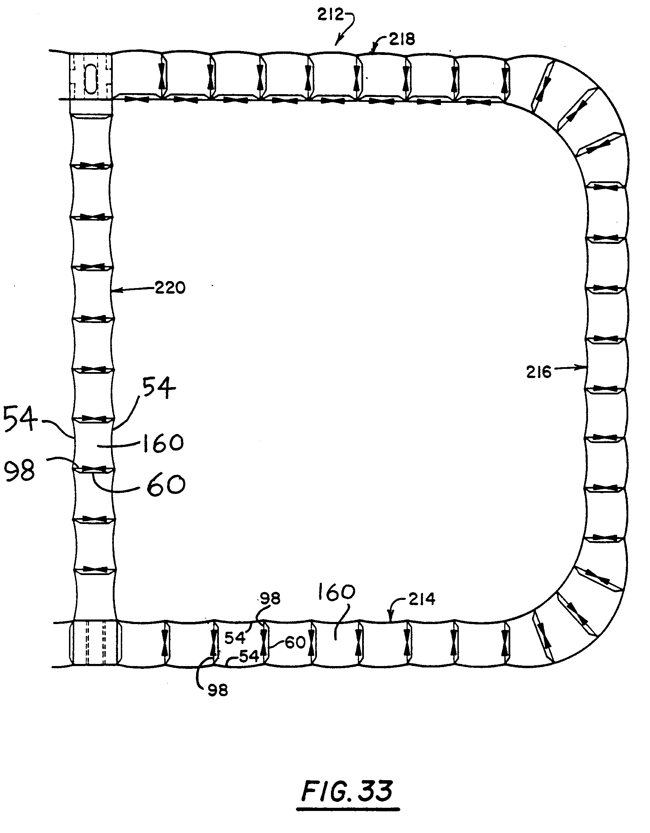

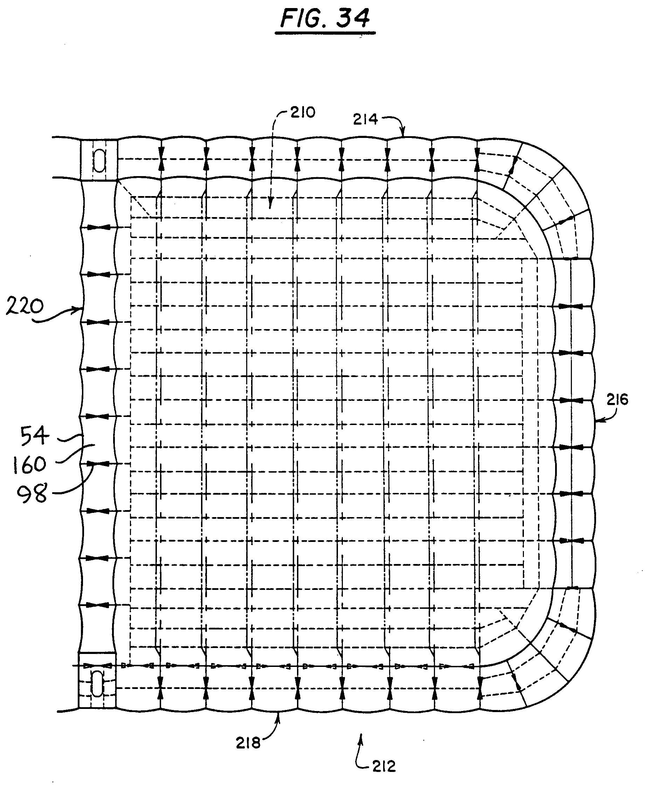

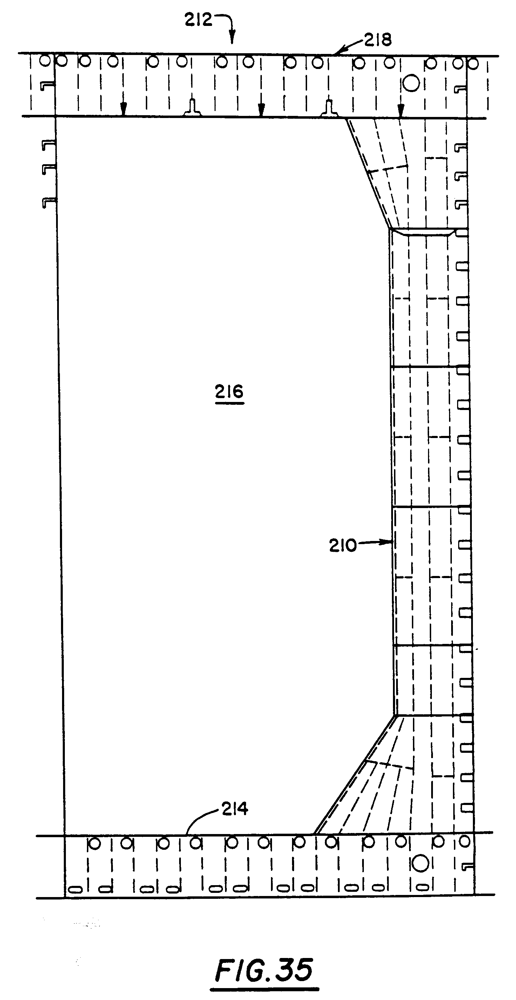

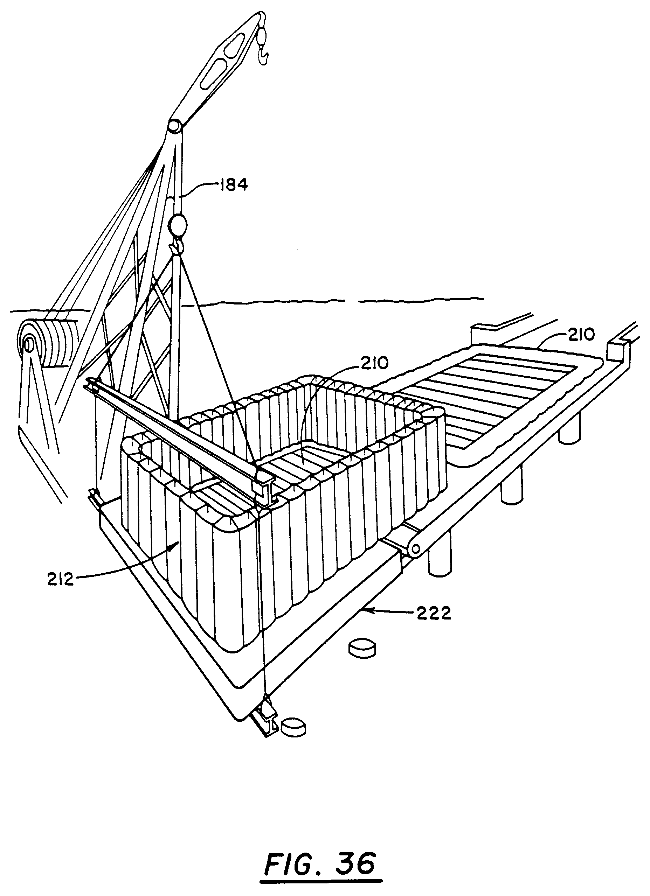

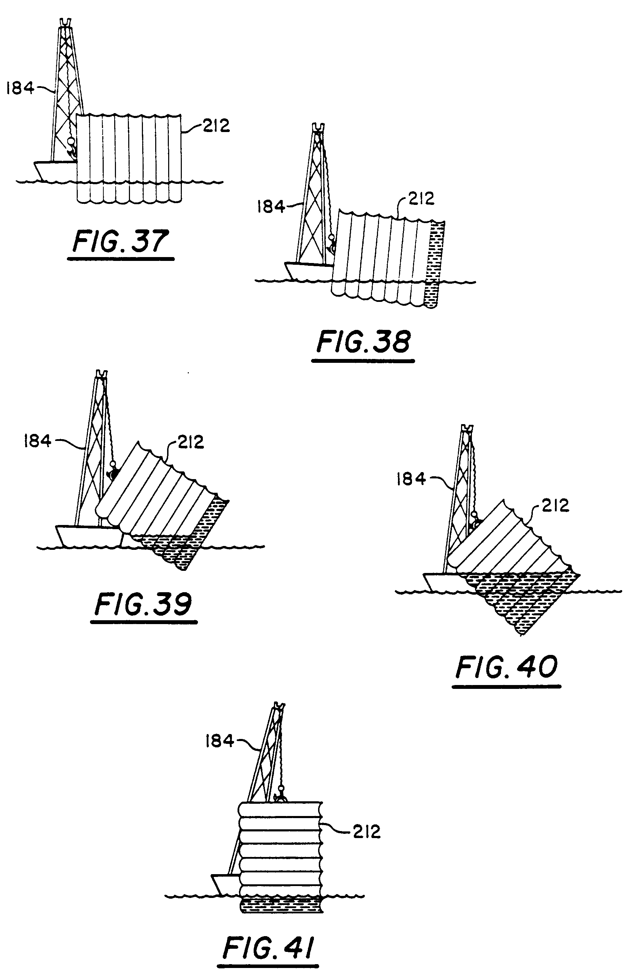

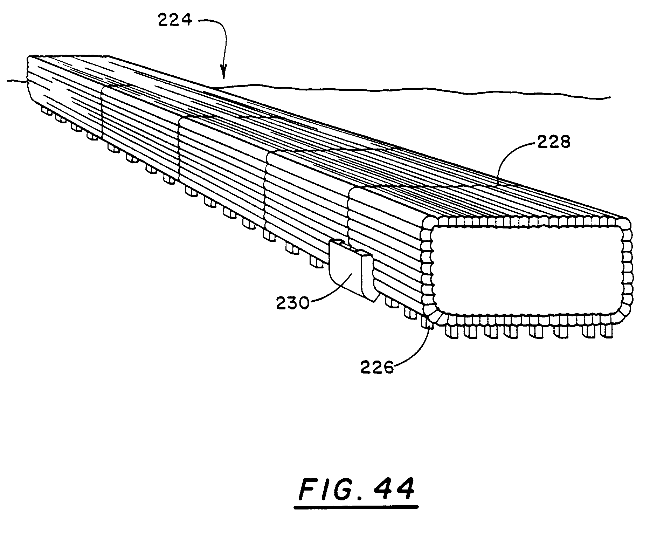

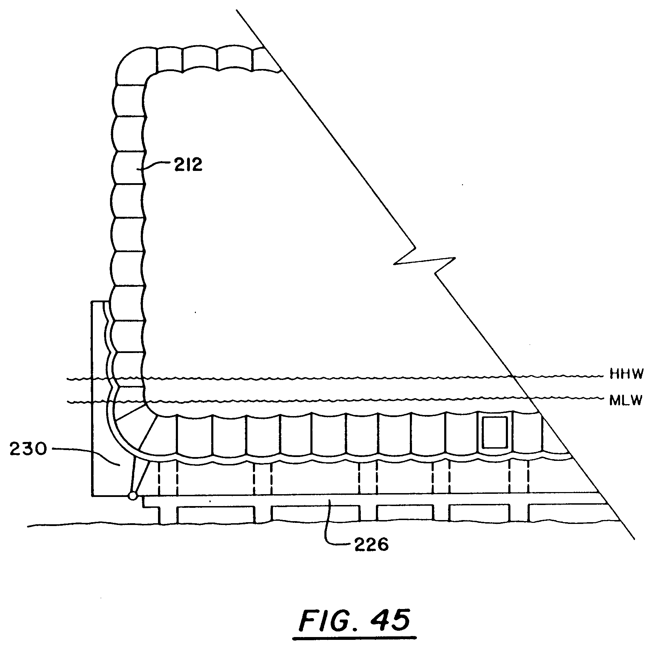

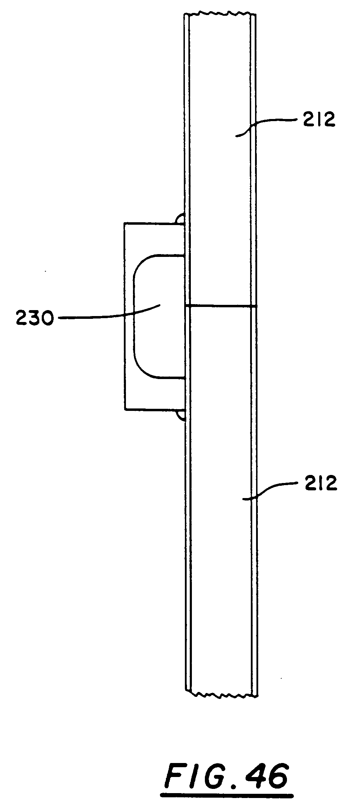

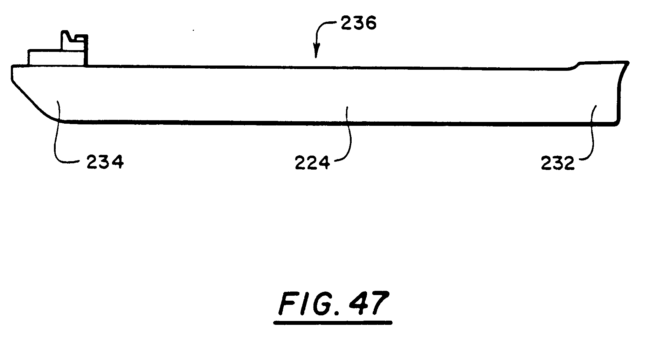

Referring to Figures 32-47, this may include providing a bulkhead 210 at a bulkhead assembly area (Figure 32), assembling a set of module subassemblies 182 vertically about the outer perimeter of the bulkhead 210 and welding the subassemblies 182 to one another and to the bulkhead 210 to create a module 212 (Figures 33-35). The completed module 212 (shown having a double bottom 214, double side walls 216, a double deck 218 and a double longitudinal vertical intermediate wall 220, wherein the curved plates 54 form the skins and the stiffened flat plates 98 form the longitudinal connectors extending between the inner and outer hulls) is then guided by the crane 184 into the water, by temporarily lowering the support from under the topside bulkhead assembly area 222, and floating the module away (Figure 41).

In the series of steps depicted in Figures 37-41, after damming open ends of cells 160 that will become submerged, certain cells are progressively partly flooded, while the crane 184 guides the module 212 as it rolls from its vertical position (Figure 37), to a horizontal position (Figure 41).

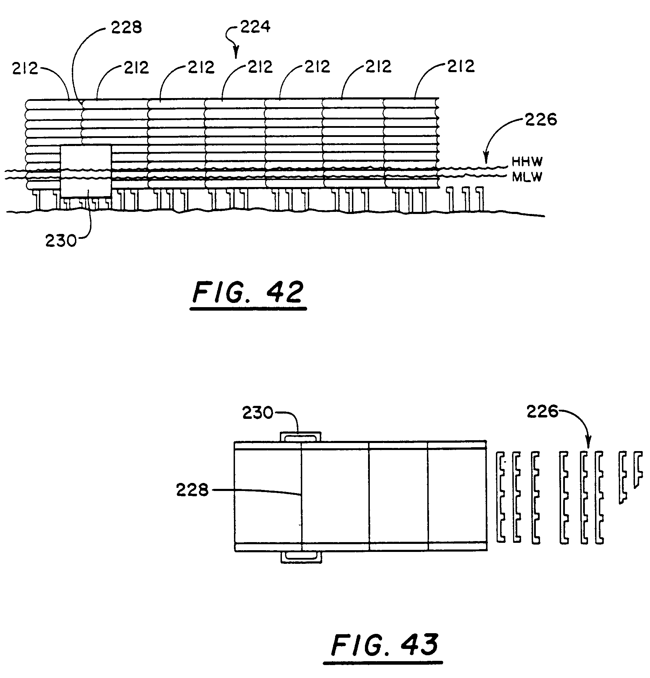

Then, the now-horizontal module 212 is floated to the end of a longitudinal midbody assembly 224 (Figures 42-46) that is partly submerged, at an intertidal location. The partially complete midbody 224 is shifted longitudinally along the longitudinal midbody assembly facility 226 until its growth end 228 is located over a joining area 230. The next horizontal module 212 is then floated into place, end-to-end with the midbody 224 with the abutting ends located in the joining area 230. Water is then excluded from the joining area and the module 212 is welded to the growth end of the midbody 224. These incremental growth steps are repeated until the midbody 224 is of the desired length. The midbody 224 may be conventionally joined to a bow section 232 and a stern section 234 of a VLCC to provide a vessel 236 having a double-hulled longitudinal midbody.

Because it can be modified to some extent without departing from the principles thereof as they have been outlined and explained in this specification, the present invention should be understood as encompassing all such modifications as are within the scope of the following claims.

## Claims

1. A module structure for a vessel, comprising a bottom (214), a deck (218), side walls (216) joining the bottom and deck, and a longitudinal vertical intermediate wall (220) located intermediate and substantially parallel to the side walls (216)
characterised in that the intermediate wall (220) comprises
a plurality of flat plate panels (24);
a plurality of further plate panels (54);
a longitudinally extending series of transversally extending stiffener plates (60) mounted to at least one face of each flat plate panel, so as to provide a plurality of stiffened flat plate panels (98);
a first plurality of said further plate panels (54) being arranged in a first series, in which individual ones of these panels spacedly adjoin one another, side edge to side edge, with respective gaps (170) between them, in a single layer;
a second plurality of said further plate panels (54) being arranged in a second series, in which individual ones of these panels spacedly adjoin one another side edge to side edge, with respective gaps (170) between them, in a single layer, so that gaps between panels (54) in said second series are substantially in register with gaps (170) between panels in said first series;
a plurality of said stiffened flat plate panels (98) being arranged in a series, in which one side edge of each stiffened flat plate panel (98) adjoins a respective said gap (170) in said first series of further plate panels (54) and an opposite side edge thereof adjoins a respective said gap (170) in each said second series of further plate panels (54); and
welded joints between and among respective ones of said panel side edges in respective ones of said gaps (170), filling said gaps and uniting said panels (54,98).

2. A module structure according to claim 1 wherein:
each stiffened flat plate panel (98) is elongate rectangular in outer perimetrical shape so as to have two opposite side edges, and two opposite end edges; and
each further plate panel (54) is elongate rectangular in outer perimetrical shape so as to have two opposite side edges, and two opposite end edges;
said plate panels (54,98) forming a plurality of longitudinally extending cells (160) of generally rectangular transverse cross-sectional shape.

3. A module structure according to claim 1 or 2 wherein said further plate panels (54) are curved plate panels.

4. A module structure according to claim 3 when including the features of claim 2, wherein each further plate panel (54) is generally cylindrically arcuately curved about an axis parallel to said side edges.

5. A module structure according to any preceding claim, wherein each said side edge of a stiffened plate panel (98) is an edge which terminates the plate at a depth substantially equal to the thickness of the respective plate panel, the said depth of the edge being substantially equal to the width of the associated gap (170) between the stiffened plate panels (98) and the edge of the said further plate panel (54) being directly in register with the associated gap.

6. A module structure according to any preceding claim wherein each said side edge of a plate panel is a cut edge of a respective plate panel.

7. A module structure according to any preceding Claim, including transversally extending bulkheads (210), each transverse bulkhead being perimetrically surrounded by and weldingly joined to the deck (218), the bottom (214), and the intermediate wall (220).

8. A module structure according to claim 7 wherein the transverse bulkheads (210) are provided at one end of the module structure.

9. A module structure according to any preceding claim wherein said bottom (214) is a double-hulled bottom.

10. A module structure according to claim 9 wherein the intermediate wall (220) is connected to the double hulled bottom (214) by welded junctions of terminal ones of the first and second series of further plate panels (54) with the double hulled bottom (214).

11. A module structure according to claim 10 wherein the double hulled bottom (214) has the same general form of construction as the intermediate wall (220) and the said terminal ones of the further plate panels (54) are joined to the double hulled bottom (214) at junctions of wall plate panels of the double hulled bottom (214).

12. A module structure according to any preceding claim wherein said deck (218) is a double hulled deck.

13. A module structure according to claim 12 wherein the intermediate wall (220) is connected to the double hulled deck (218) by welded junctions of terminal ones of the first and second series of further plate panels (54) with the double hulled deck (218).

14. A module structure according to claim 13 wherein the double hulled deck (218) has the same general form of construction as the intermediate wall (220) and the said terminal ones of the further plate panels (54) are joined to the double hulled deck (218) at junctions of wall plate panels of the double hulled deck (218).

15. A module structure according to any preceding claim wherein said side walls (216) are double hulled side walls.

16. A longitudinal mid body for a vessel comprising a plurality of module structures (212) according to any preceding claim, the module structures being joined one another end to end in a longitudinally extending series, to thereby provide a vessel longitudinal midbody (224).

17. A vessel comprising a longitudinal midbody according to Claim 16, a vessel bow section (232) joined to one end of said longitudinal midbody, and a vessel stern section (234) joined to an opposite end of said longitudinal midbody (224).

## Patentansprüche

1. Modulanordnung für einen Schiffsrumpf mit einem Boden (214), einem Deck (218), Seitenwänden (216), durch die der Boden mit dem Deck verbunden ist, und mit einer längsgerichteten vertikalen zwischenliegenden Wand (220), die zwischen und im wesentlichen parallel zu den Seitenwänden (216) angeordnet ist,
**dadurch gekennzeichnet,** daß die zwischenliegende Wand (220) aufweist:
eine Anzahl von ebenen Platten (24);
eine Anzahl von weiteren Platten (54);
eine in Längsrichtung verlaufende Reihe von sich in Querrichtung erstreckenden Versteifungsplatten (60), die an zumindest einer Seite von jeder ebenen Platte angebracht sind, um so eine Anzahl von versteiften ebenen Platten (98) zu schaffen;
eine erste Anzahl der weiteren Platten (54), die in einer ersten Reihe angeordnet sind, in der einzelne dieser Platten beabstandet, Seitenkante an Seitenkante, mit jeweiligen Spalten (170) dazwischen, in einer einzelnen Schicht nebeneinanderliegen;
eine zweite Anzahl der weiteren Platten (54), die in einer zweiten Reihe angeordnet sind, in der einzelne dieser Platten beabstandet, Seitenkante an Seitenkante, mit jeweiligen Spalten (170) dazwischen, in einer einzelnen Schicht nebeneinanderliegen, so daß die Spalte zwischen den Platten (54) in der zweiten Reihe sich im wesentlichen in Ausrichtung befinden mit den Spalten (170) zwischen den Platten in der ersten Reihe;
eine Anzahl der versteiften ebenen Platten (98), die in einer Reihe angeordnet ist, wobei eine Seitenkante von jeder versteiften ebenen Platte (98) mit einem zugehörigen Spalt (170) in der ersten Reihe der weiteren Platten (54) und eine gegenüberliegende Seitenkante davon mit einem zugehörigen Spalt (170) in der zweiten Reihe der weiteren Platten (54) zusammentrifft; und
geschweißte Verbindungen zwischen jeweiligen Seitenkanten in den jeweiligen Spalten (170), durch die die Spalten ausgefüllt und die Platten (54, 98) miteinander verbunden sind.

2. Modulanordnung nach Anspruch 1, wobei:
jede versteifte ebene Platte (98) eine längliche rechteckige äußere Umfangsform mit zwei gegenüberliegenden Seitenkanten und zwei gegenüberliegenden Endkanten hat; und
jede weitere Platte (54) eine längliche rechteckige äußere Umfangsform mit zwei gegenüberliegenden Seitenkanten und zwei gegenüberliegenden Endkanten hat;
die Platten (54, 98) eine Anzahl von sich in Längsrichtung erstreckenden Zellen (160) mit einer im wesentlichen rechteckigen Querschnittsform bilden.

3. Modulanordnung nach Anspruch 1 oder 2, wobei die weiteren Platten (54) gekrümmte Platten sind.

4. Modulanordnung nach Anspruch 3 mit den Merkmalen von Anspruch 2, wobei jede weitere Platte (54) im wesentlichen zylindrisch um eine parallel zu den Seitenkanten verlaufende Achse gekrümmt ist.

5. Modulanordnung nach einem der vorhergehenden Ansprüche, wobei jede Seitenkante einer versteiften Platte (98) eine Kante ist, durch die die Platte mit einer Dicke begrenzt ist, die im wesentlichen gleich der Dicke der entsprechenden Platte ist, wobei die Dicke der Kante im wesentlichen gleich der Breite des zugehörigen Spalts (170) zwischen den versteiften Platten (98) und der Kante der weiteren Platte (54) ist, die sich direkt in Ausrichtung mit dem zugehörigen Spalt befindet.

6. Modulanordnung nach einem der vorhergehenden Ansprüche, wobei jede Seitenkante einer Platte eine Schnittkante einer jeweiligen Platte ist.

7. Modulanordnung nach einem der vorhergehenden Ansprüche mit einer querverlaufenden Schottwand (210), wobei jede querverlaufende Schottwand an ihrem Umfang von dem Deck (218), dem Boden (214) und den zwischenliegenden Wänden (220) umgeben und mit diesen verschweißt ist.

8. Modulanordnung nach Anspruch 7, wobei die querverlaufenden Schottwände (210) an einem Ende der Modulanordnung vorgesehen sind.

9. Modulanordnung nach einem der vorhergehenden Ansprüche, wobei der Boden (214) ein doppelwandiger Boden ist.

10. Modulanordnung nach Anspruch 9, wobei die zwischenliegende Wand (220) mit dem doppelwandigen Boden (214) durch Schweißverbindungen zwischen den untersten weiteren Platten (54) der ersten und der zweiten Reihe und dem doppelwandigen Boden (214) verbunden ist.

11. Modulanordnung nach Anspruch 10, wobei der doppelwandige Boden (214) im wesentlichen den gleichen konstruktiven Aufbau wie die zwischenliegende Wand (220) hat und die untersten weiteren Platten (54) mit dem doppelwandigen Boden (214) an Verbindungsstellen der Bodenplatten des doppelwandigen Bodens (214) verbunden sind.

12. Modulanordnung nach einem der vorhergehenden Ansprüche, wobei das Deck (218) ein doppelwandiges Deck ist.

13. Modulanordnung nach Anspruch 12, wobei die zwischenliegende Wand (220) mit dem doppelwandigen Deck (218) durch Schweißverbindungen zwischen den obersten weiteren Platten (54) der ersten und der zweiten Reihe und dem doppelwandigen Deck (218) verbunden ist.

14. Modulanordnung nach Anspruch 13, wobei das doppelwandige Deck (218) im wesentlichen den gleichen konstruktiven Aufbau wie die zwischenliegende Wand (220) hat und die obersten weiteren Platten (54) mit dem doppelwandigen Deck (218) an Verbindungsstellen der Wandplatten des doppelwandigen Decks (218) verbunden sind.

15. Modulanordnung nach einem der vorhergehenden Ansprüche, wobei die Seitenwände (216) doppelwandige Seitenwände sind.

16. Längsgerichteter Mittelkörper für einen Schiffsrumpf mit einer Anzahl von Modulanordnungen (212) nach einem der vorhergehenden Ansprüche, wobei die Modulanordnungen in einer sich in Längsrichtung erstreckenden Reihe Ende an Ende miteinander verbunden sind, um dadurch einen längsgerichteten Schiffsrumpfmittelkörper (224) zu bilden.

17. Schiffsrumpf mit einem längsgerichteten Mittelkörper nach Anspruch 16, einem Schiffsrumpfbugabschnitt (232), der mit einem Ende des längsgerichteten Mittelkörpers verbunden ist, und einem Schiffsrumpfheckabschnitt (234), der mit einem gegenüberliegenden Ende des längsgerichteten Mittelkörpers (224) verbunden ist.

## Revendications

1. Structure modulaire destinée à un navire, comprenant un fond (214), un pont (218), des parois latérales (216) reliant le fond et le pont, ainsi qu'une paroi intermédiaire verticale longitudinale (220) placée entre et sensiblement parallèlement auxdites parois latérales (216),
caractérisée en ce que la paroi intermédiaire (220) comprend
plusieurs panneaux (24) formés de plaques planes ;
plusieurs autres panneaux (54) formés de plaque planes ;
une série disposée longitudinalement de plaques raidisseuses (60) orientées transversalement et montées sur au moins une surface de chaque panneau formé d'une plaque plane de manière à constituer plusieurs panneaux (98) formés de plaques planes raidies ;
un premier multiple desdits autres panneaux formés de plaques (54) étant disposé en une première série, dans laquelle certains, individuels, de ces panneaux sont adjoints les uns aux autres à distance, bord latéral contre bord latéral, avec des intervalles respectifs (170) entre eux, en une couche unique ;
un second multiple desdits autres panneaux (54) formés de plaques étant disposé en une seconde série, dans laquelle certains individuels de ces panneaux sont adjoints les uns aux autres à distance, bord latéral contre bord latéral, avec des intervalles respectifs (170) entre eux en une couche unique, de manière que les intervalles séparant les panneaux (54) de ladite seconde série soient sensiblement à l'alignement des intervalles (170) situés entre les panneaux de ladite première série ;
un multiple desdits panneaux (98) formés de plaques planes raidies étant disposé en une série, dans laquelle un bord latéral de chaque panneau (98) formé d'une plaque plane raidie est adjoint à undit intervalle respectif (170) de ladite première série d'autres panneaux (54) formés de plaques et un bord latéral opposé desdits panneaux (98) est adjoint à undit intervalle respectif (170) de ladite seconde série d'autres panneaux formés de plaques (54) ; et
des joints soudés entre et parmi certains respectifs desdits bords latéraux de panneaux dans certains respectifs desdits intervalles (170) de manière à emplir lesdits intervalles et à solidariser lesdits panneaux (54, 98).

2. Structure modulaire selon la revendication 1, dans laquelle :
chaque panneau (98) formé d'une plaque plane raidie a une forme périphérique extérieure qui est allongée et rectangulaire de manière à avoir deux bords latéraux opposés et deux bords d'extrémité opposés ; et
chaque autre panneau (54) formé d'une plaque a une forme périphérique extérieure rectangulaire et allongée de manière à avoir deux bords latéraux opposés et deux bords d'extrémité opposés ;
lesdits panneaux formés de plaques (54, 98) formant de multiples cellules (160) disposées longitudinalement et ayant une forme sensiblement rectangulaire en coupe transversale.

3. Structure modulaire selon la revendication 1 ou 2, dans laquelle lesdits autres panneaux (54) formés de plaques sont des panneaux formés de plaques courbes.

4. Structure modulaire selon la revendication 3, incluant les caractéristiques de la revendication 2, dans laquelle chaque autre panneau (54) formé d'une plaque est incurvé de manière à former un arc sensiblement cylindrique autour d'un axe parallèle auxdits bords latéraux.

5. Structure modulaire selon l'une quelconque des revendications précédentes, dans laquelle chacun desdits bords latéraux d'un panneau (98) formé d'une plaque raidie est un bord qui achève la plaque à une profondeur sensiblement égale à l'épaisseur du panneau respectif formé d'une plaque, ladite profondeur du bord étant sensiblement égale à la largeur de l'intervalle associé (170) compris entre les panneaux (18) formés de plaques raidies et le bord dudit autre panneau (54) formé d'une plaque étant directement à l'alignement dudit intervalle associé.

6. Structure modulaire selon l'une quelconque des revendications précédentes, dans laquelle chaque bord latéral d'un panneau formé d'une plaque est un bord coupé d'un panneau respectif formé d'une plaque.

7. Structure modulaire selon l'une quelconque des revendications précédentes, comprenant des cloisons orientées transversalement (210), chaque cloison transversale étant entourée à la périphérie par le, et étant jointe par soudure au, pont (218), au fond (214) et à la paroi intermédiaire (220).

8. Structure modulaire selon la revendication 7, dans laquelle les cloisons transversales (210) sont placées à une extrémité de la structure modulaire.

9. Structure modulaire selon l'une quelconque des revendications précédentes, dans laquelle ledit fond (214) est un fond à coque double.

10. Structure modulaire selon la revendication 9, dans laquelle la paroi intermédiaire (214) est reliée au fond à coque double (214) par des jonctions soudées de certains d'extrémité des première et seconde séries d'autres panneaux (54) formés de plaques avec le fond à cloison double (214).

11. Structure modulaire selon la revendication 10, dans laquelle le fond à coque double (214) a la même forme générale de construction que la paroi intermédiaire (220) et lesdits certains d'extrémité des autres panneaux (54) formés de plaques sont reliés au fond à coque double (214) à des jonctions des panneaux formés de plaques de paroi du fond à coque double (214).

12. Structure modulaire selon l'une quelconque des revendications précédentes, dans laquelle ledit pont (218) est un pont à coque double.

13. Structure modulaire selon la revendication 12, dans laquelle la paroi intermédiaire (220) est reliée au pont à coque double (218) par des jonctions soudées de certains d'extrémité des première et seconde séries d'autres panneaux (54) formés de plaques avec le pont à coque double (218).

14. Structure modulaire selon la revendication 13, dans laquelle le pont à coque double (218) a la même forme générale de construction que la paroi intermédiaire (220) et lesdits certains d'extrémité des autres panneaux (54) formés de plaques sont reliés au pont à coque double (218) à des jonctions des panneaux formés de plaque de paroi du pont à coque double (218).

15. Structure modulaire selon l'une quelconque des revendications précédentes, dans laquelle lesdites parois latérales (216) sont des parois latérales de coque double.

16. Corps central longitudinal d'un navire, comprenant plusieurs structures modulaires (212) selon l'une quelconque des revendication précédentes, les structures modulaires étant reliées les unes aux autres bout à bout en une série disposée longitudinalement de manière à réaliser ainsi un corps central longitudinal de navire (224).

17. Navire comprenant un corps central longitudinal selon la revendication 16, une partie avant du navire (232) étant reliée à une extrémité dudit corps central longitudinal et une partie arrière du navire (234) étant reliée à l'extrémité opposée dudit corps central longitudinal (224).
